# EUROPEAN PATENT SPECIFICATION

(11) **EP 3 754 514 B1**
(45) Date of publication and mention of the grant of the patent: **08.05.2024**
(21) Application number: 19751274.2
(22) Date of filing: 03.02.2019
(51) Int. Cl.: G06F 9/54, G06F 16/27, G06F 16/242, G06F 16/18, G06F 9/48, G06F 9/50, G06F 9/46, G06F 16/00, G06F 16/23

(54) **DISTRIBUTED DATABASE CLUSTER SYSTEM, DATA SYNCHRONIZATION METHOD AND STORAGE MEDIUM**
VERTEILTES DATENBANK-CLUSTER-SYSTEM, DATENSYNCHRONISATIONSVERFAHREN UND SPEICHERMEDIUM
SYSTÈME EN GRAPPES DE BASES DE DONNÉES RÉPARTIES, PROCÉDÉ DE SYNCHRONISATION DE DONNÉES ET SUPPORT DE STOCKAGE

(30) Priority: 12.02.2018 CN 201810147335
(43) Date of publication of application: 23.12.2020
(73) Proprietor: ZTE Corporation, shenzhen Guangdong 518057 (CN)
(72) Inventor: DAI, Fu, Shenzhen, Guangdong 518057 (CN); LUO, Shengmei, Shenzhen, Guangdong 518057 (CN); FU, Yu, Shenzhen, Guangdong 518057 (CN); QIAN, Yuming, Shenzhen, Guangdong 518057 (CN)
(74) Representative: Chimini, Francesco
(86) International application number: PCT/CN2019/074699
(87) International publication number: WO 2019/154394

(56) References cited:
- CN-A- 101 401 073
- CN-A- 102 693 324
- CN-A- 104 182 441
- US-A- 6 125 368
- US-A1- 2007 061 379
- US-A1- 2007 239 950
- US-B1- 6 516 327

## Description

### Technical Field

The present disclosure relates to the field of distributed databases, and in particular, to a distributed database cluster system, a data synchronization method, and a storage medium.

### Background

In recent years, more and more organizations begin to focus on and use open source database products, such as MySQL (SQL represents Structured Query Language). With the development of services and technologies, database technologies are developing towards clustering. The data synchronization technology between clusters is a fundamental technology of disaster recovery, and research in the development of efficient and consistent data synchronization methods between two data centers is of high and deep significance.

Currently, in the field of distributed databases, data synchronization between data clusters is mainly implemented by point-to-point data migration. However, due to various factors, such as differences in servers and networks, data synchronized by different data nodes between the clusters cannot achieve global time consistency. For example, when two data nodes A and B in the master cluster synchronize their respective data to two data nodes A' and B' in the backup cluster, at a certain moment, A' may synchronize the data of A at the moment T0, but B' may synchronize the data of B at the moment T1. If the switching occurs at this time, the service needs to be migrated to the backup cluster, and since the data of the backup cluster is not globally consistent, the service cannot be switched to the backup cluster immediately. Furthermore, because there is no reference time point or clock, the service data cannot be recovered to a consistent time point.

In addition to switching scenarios between master and backup database clusters, in other scenarios involving data synchronization, including but not limited to incremental data subscription and incremental data extraction, there is also a problem that data synchronized by different data nodes between clusters cannot achieve global time consistency.

US 2007/239950 A1 discloses a method, system, and article of manufacture, wherein a primary control unit sends a selected time to a plurality of secondary control units. US6516327B1 discloses a system, method, and processor readable medium containing code for causing a processor to synchronize a secondary database system, such as one stored on a palmtop electronic device, with a distributed database system, comprising a main database and at least one replica database.

### Summary

Distributed database cluster systems-and data synchronization methods according to the invention are defined in the appended set of claims.

### Brief Description of the Drawings

The accompanying drawings described herein are used to provide a deeper understanding of the embodiments of the present disclosure and form a part of the present disclosure, and the schematic embodiments of the present disclosure and the description thereof are used to explain the embodiments of the present disclosure, and do not limit the embodiments of the present disclosure. In the figures:
Fig. 1 is a schematic diagram showing the architecture of a distributed database cluster system according to Embodiment 1 of the present disclosure;
Fig. 2 is a schematic diagram showing a first exemplary architecture of a distributed database cluster system according to Embodiment 1 of the present disclosure;
Fig. 3 is a schematic diagram showing a second exemplary architecture of a distributed database cluster system according to Embodiment 1 of the present disclosure;
Fig. 4 is a schematic diagram showing the architecture of a distributed database cluster system according to Embodiment 2 of the present disclosure;
Fig. 5 is a schematic diagram showing an exemplary architecture of a distributed database cluster system according to Embodiment 2 of the present disclosure;
Fig. 6 is a flowchart of a data synchronization method according to Embodiment 3 of the present disclosure;
Fig. 7 is a flowchart of a data synchronization method according to Embodiment 4 of the present disclosure;
Fig. 8 is a schematic diagram showing the architecture of a distributed database data synchronization apparatus for ensuring global consistency according to Embodiment 5 of the present disclosure;
Fig. 9 is a detailed working flowchart of a data synchronization method according to Embodiment 5 of the present disclosure;
Fig. 10 is a schematic diagram of splitting and encapsulating of SQL statements according to Embodiment 6 of the present disclosure;
Fig. 11 is a flowchart of parallel processing of SQL statement lines according to Embodiment 7 of the present disclosure;
Fig. 12 is a flowchart of real-time global consistency filtering according to Embodiment 8 of the present disclosure;
Fig. 13 is a flowchart of final global consistency filtering according to Embodiment 8 of the present disclosure;
Fig. 14 is a schematic diagram showing the system architecture for data synchronization of a distributed database cluster under a high performance mode according to Embodiment 9 of the present disclosure;
Fig. 15 is a schematic diagram showing the system architecture for data synchronization of a distributed database cluster under a high performance mode according to Embodiment 10 of the present disclosure;
Fig. 16 is a schematic diagram showing the system architecture of a distributed database quasi-real-time backup according to Embodiment 11 of the present disclosure; and
Fig. 17 is a schematic diagram showing the system architecture of data extraction based on distributed database incremental data according to Embodiment 12 of the present disclosure.

### Description of embodiments

A distributed database cluster system is composed of a plurality of database groups. Each database group is composed of a plurality of independent database nodes, data of database nodes in a database group is completely consistent, and only one database node (which is referred to as a master database) in the database group provides a writing service to the outside device, and other data nodes (which are referred to as backup databases) synchronize the data to the local through a replication technology between the databases. A database function is provided to an application in a data service manner, and a unified standard interface such as an SQL interface is provided to the application.

For synchronization between distributed database cluster systems, for example, data synchronization between data clusters, incremental data subscription, incremental data extraction, etc., data synchronization schemes in the related art often have problems and defects in the incapability of providing global consistency.

In view of the above problems, the embodiments of the present disclosure provide a distributed database cluster system, a data synchronization method, and a storage medium. Hereinafter, the present disclosure will be described in detail with reference to the accompanying drawings in conjunction with embodiments. It should be noted that the embodiments and the features in the embodiments of the present application can be combined with each other without conflict.

It should be noted that the terms "first", "second" and the like in the description and claims of the present disclosure and the figures described above are used to distinguish similar objects, and are not used to describe a specific order or a precedence order.

### Embodiment 1

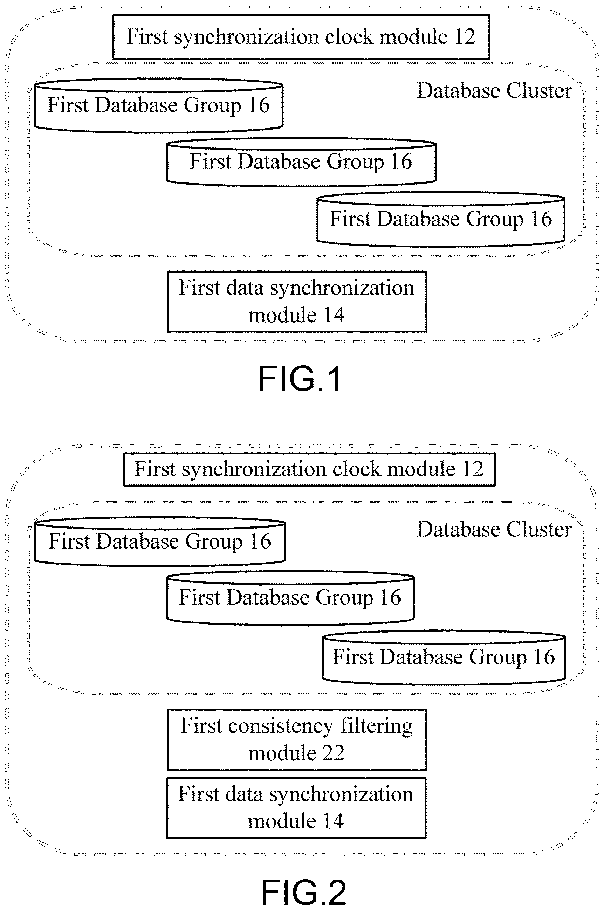

This embodiment provides a distributed database cluster system. Fig. 1 is a schematic diagram showing the architecture of a distributed database cluster system according to Embodiment 1 of the present disclosure. As shown in Fig. 1, the distributed database cluster system may include a first synchronization clock module 12, a first data synchronization module 14, and a plurality of first database groups 16, where each first database group 16 of the plurality of first database groups 16 includes a first master database (not shown).

The first synchronization clock module 12 is configured to periodically send a clock synchronization instruction.

The first data synchronization module 14 is configured to respectively encapsulate database operation instructions, which are recorded by each first master database between two adjacent clock synchronization instructions sent by the first synchronization clock module, into a first operation instruction block, and send the first operation instruction block.

Through the above solution, the first synchronization clock module 12 in the distributed database cluster system periodically sends a clock synchronization instruction. In a data synchronization process, the first data synchronization module 14 encapsulates database operation instructions recorded by each master database between two adjacent clock synchronization instructions into a first operation instruction block for sending, so that for each master database, the data packets serving as the basis for data synchronization are ensured to have the same time reference point. Thus, the problem in the related art that data synchronized by different data nodes cannot achieve global time consistency can be solved. The data records for synchronization of different data nodes are ensured to be based on the same time reference point, thereby guaranteeing global consistency in terms of data records.

In the distributed database cluster system, there may be many manners for the first data synchronization module 14 to determine which instructions are the database operation instructions recorded by each first master database between the two adjacent clock synchronization instructions sent by the first synchronization clock module 12, so that the first data synchronization module 14 can encapsulate the database operation instructions into the first operation instruction block. An implementation that is easy to implement and does not need to greatly change the existing processing mode of the distributed database cluster system is provided as follows.

As an exemplary embodiment, the first synchronization clock module 12 is configured to periodically send the clock synchronization instruction to each first master database; the first master database is configured to write received database operation instructions into a log file of the first master database, and write the received clock synchronization instruction into the log file; the first data synchronization module 14 is configured to respectively acquire the log file of each first master database, encapsulate the database operation instructions located between two clock synchronization instructions in the log file into the first operation instruction block, and send the first operation instruction block. In this way, the master database writes the received clock synchronization instructions and the common database operation instructions into the log file according to a normal processing manner. The first data synchronization module 14 may read the log file and segment the database operation instructions according to the clock synchronization instructions in the log file, and encapsulate the database operation instructions located between two clock synchronization instructions into the first operation instruction block. In order to facilitate the log recording of the master database, a relatively common database operation statement may be adopted to generate a clock synchronization instruction, so that the master database can conveniently write the clock synchronization instruction into the log file along with common database operation statements. For an existing distributed database cluster system, a preferred database operation statement is SQL, that is, a synchronous clock SQL statement may be used as the clock synchronization instruction, and the database operation instructions may also be SQL statements.

As described above, the solution in this embodiment performs the following operations for operation instructions recorded by each master database: the database operation instructions recorded between two adjacent clock synchronization instructions are encapsulated into a first operation instruction block for sending. Thus, it is ensured that for each master database, the data packets based on which the data synchronization is performed all have the same time reference point, so that the operation instruction recording plane in the database reaches global consistency. In a case where the processing task distribution in the database cluster is relatively balanced or the processing resource bandwidth is sufficient, the execution duration of each operation instruction is very small and the operation instructions are under a relatively uniform distribution. In this case, global consistency can substantially be achieved at the execution layer of the database. In a practical distributed database cluster system, there may occasionally be a case where the processing task distribution in the database cluster is less unbalanced or the processing resource bandwidth is small. In this case, there may be differences in the execution states of different processing tasks in the same database cluster. In this case, at least one of the following two processing manners (final global consistency and real-time global consistency) may be adopted to ensure global consistency of the database in the execution layers.

### Final global consistency scheme

In this solution, the first data synchronization module 14 is configured to send the first operation instruction block to a distributed database cluster system at a peer end. In this case, the first operation instruction block sent to the distributed database cluster system of the peer end contains database operation instructions recorded in the master database between two synchronization clock signals, and no consistency filtering is performed for these database operation instructions. The data synchronization module of the distributed database cluster system at the peer end normally synchronizes these database operation instructions to the corresponding master database of the distributed database cluster system at the peer end. However, the distributed database cluster system at the peer end performs global consistency filtering when cluster switching is performed for the service. This embodiment is suitable for scenarios where the disaster recovery system has high requirements on RPO indexes, since in this solution data can be efficiently transmitted to a peer cluster and persisted, thereby ensuring that the RPO is as small as possible. A specific implementation of performing a global consistency filtering at the accepter end of data synchronization when cluster switching is performed for the service in this processing mode may refer to Embodiment 8.

### Real time global consistency scheme

According to the real-time global consistency scheme, a first consistency filtering module 22 is added in the distributed database cluster system. Fig. 2 is a schematic diagram showing a first exemplary architecture of a distributed database cluster system according to Embodiment 1 of the present disclosure. As shown in Fig. 2, the distributed database cluster system further includes a first consistency filtering module 22.

The first data synchronization module 14 is configured to send the first operation instruction block to the first consistency filtering module 22. The first consistency filtering module 22 is configured to receive the first operation instruction block sent by the first data synchronization module 14, perform global consistency filtering on the first operation instruction block, encapsulate database operation instructions, which satisfy a filtering condition, in the first operation instruction block into a second operation instruction block, and send the second operation instruction block to a distributed database cluster system at a peer end, wherein the filtering condition includes that the database operation instructions are in a global transaction submitted state. Through this scheme, the database operation instructions that have not been executed (i.e., in a global transaction unsubmitted state) may be filtered from the first operation instruction block, and only the database operation instructions that have been executed are reserved and encapsulated into a second operation instruction block and sent to the second distributed database cluster system. In this way, the distributed database cluster system at the peer end synchronizes data that has been executed by the current distributed database cluster system, so that the data synchronized to the backup cluster is always in a consistent state. This embodiment is suitable for scenarios where the disaster backup system has high requirements on RTO indexes. The service may take over the peer distributed database cluster at any time, and the RTO may be equal to zero. A specific implementation of performing global consistency filtering in real time at the synchronization initiator in this processing mode may refer to Embodiment 8.

Considering that in the scenarios of incremental data subscription and incremental data extraction, the distributed database cluster system at the peer end has a filtering requirement for received data and only data objects (databases, tables, etc.) satisfying a specific condition need to be sent to the distributed database cluster system at the peer end, this filtering task can also be executed by the first consistency filtering module 22. A filtering condition may be added, for example, the filtering condition may further include that the database operation instructions comply with a data object filtering rule corresponding to the distributed database cluster system at the peer end.

For database operation instructions that have not been executed (i.e., in a global transaction unsubmitted state), the first consistency filtering module 22 is further configured to buffer the database operation instructions, which are in a global transaction unsubmitted state, in the first operation instruction block, and when a next first operation instruction block corresponding to the current first master database sent by the first data synchronization module 14 is received, add the buffered database operation instructions to the first operation instruction block and then perform global consistency filtering on the first operation instruction block.

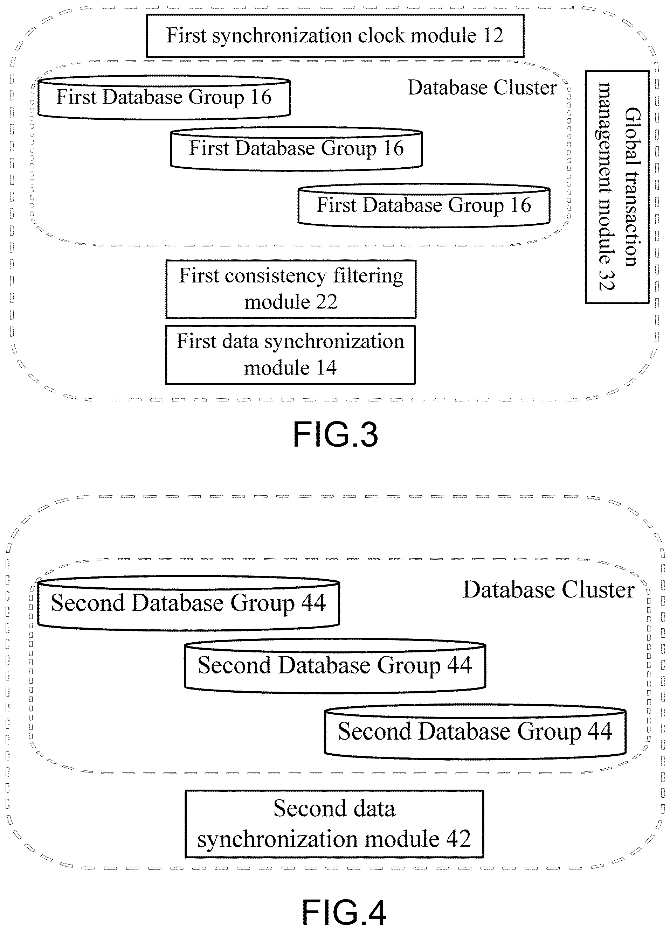

In order to perform global transaction management inside the distributed database cluster system, so that the first consistency filtering module 22 can conveniently determine whether a database operation instruction is currently in a global submitted state or not, some improvement can be made to the distributed database cluster system. Fig. 3 is a schematic diagram showing a second exemplary architecture of a distributed database cluster system according to Embodiment 1 of the present disclosure. As shown in Fig. 3, the distributed database cluster system further includes a global transaction management module 32, and the global transaction management module 32 is configured to manage a global transaction identifier (ID) capable of uniquely identifying a global transaction, and record a state and a life cycle of each global transaction.

The first synchronization clock module 12 is configured to request a current active transaction list of each first master database periodically, record the current active transaction list and a timestamp for acquiring the current active transaction list in a synchronization table corresponding to the first master database, and put the timestamp and information of the current active transaction list in the clock synchronization instruction sent to the first master database. The first consistency filtering module 22 is configured to search for a latest current active transaction list recorded in the synchronization table corresponding to a current first master database, removing database operation instructions corresponding to global transaction IDs in the latest current active transaction list, and encapsulate remaining database operation instructions into the second operation instruction block as the database operation instructions, which satisfy the filtering condition, in the global transaction submitted state.

As an exemplary implementation, before data synchronization processing is performed, a synchronization position between a distributed database cluster system at a peer end and a current distributed database cluster system may be acquired. In this case, the first data synchronization module 14 is further configured to receive synchronization position request information sent from a distributed database cluster system at the peer end, wherein the synchronization position request information carries a synchronization position between the distributed database cluster system and the distributed database cluster system at the peer end; and encapsulate, according to the synchronization position carried in the synchronization position request information, the database operation instructions recorded by each first master database.

Described above are the functions performed by various modules of the distributed database cluster system at the initiator end of data synchronization. It should be noted that, in practical applications, the role of the distributed database cluster system often changes, for example, the distributed database cluster system may currently be a master distributed database cluster system, and needs to be used as an initiator of data synchronization. However, after the distributed database cluster system becomes faulty, the distributed database cluster system may become a backup distributed database cluster system. In this case, the distributed database cluster system serves as an acceptor of data synchronization. Therefore, as an exemplary implementation, various modules of the distributed database cluster system also have the following functions.

As an accepter end of data synchronization, after receiving a data synchronization packet sent by an initiator end, the distributed database cluster system needs to execute contents of the data synchronization packet to complete data synchronization. In this case, the first data synchronization module 14 is further configured to receive an operation instruction block sent by a distributed database cluster system at a peer end, and execute database operation instructions in the received operation instruction block.

As an exemplary embodiment, the first data synchronization module 14 is configured to execute the database operation instructions in the received operation instruction block in the following manner:
persisting the database operation instructions in the received operation instruction block into a playback file; and
parsing the playback file, splitting the database operation instructions in the playback file by lines, and putting the database operation instructions into different working threads for processing.

As an exemplary implementation, the first data synchronization module 14 is configured to parse the playback file, split the database operation instructions in the playback file by lines, and put the database operation instructions into different working threads for processing in the following manner:
splitting the database operation instructions in the received operation instruction block into different data lines according to table names and primary keys, wherein database operation instructions in a same data line compose a transaction according to a sequence; and
putting database operation instructions of different transactions into different working threads for processing.

In order to get prepared for the task restoration resulted from playback failure, as an exemplary implementation, the first data synchronization module 14 may be further configured to persist a position where the database operation instructions are executed successfully into a file after the database operation instructions in the received operation instruction block are executed successfully.

As described in the final global consistency scheme, the distributed database cluster system at the peer end performs global consistency filtering when cluster switching is performed for the service. Considering a case where the distributed database cluster system serves as a backup distributed database cluster system for the distributed database cluster system at the peer end, the first data synchronization module 14 may invoke the first consistency filtering module 22 when the distributed database cluster system needs to become a master distributed database cluster system in place of the distributed database cluster system at the peer end.

In the exemplary embodiment, the first consistency filtering module 22 is configured to:
acquire a synchronization table corresponding to each first master database, determine a timestamp of a latest synchronization for each first master database according to the synchronization table, and determine an earliest timestamp from the timestamp of the latest synchronization for each first master database as a switching reference time point;
for each first master database for which the timestamp of the latest synchronization is later than the switching reference time point, roll data of the first master database back to a recorded state at the switching reference time point, and restore data of the first master database to a globally consistent state.

As an exemplary implementation, the first consistency filtering module 22 is configured to roll the data of the first master database back to the recorded state at the switching reference time point, and restore the data of the first master database to the globally consistent state in the following manner:
generating a reverse database operation instruction for each database operation instruction after the switching reference time point, and executing the reverse database operation instruction; and
generating a reverse database operation instruction for each database operation instruction which is in a global transaction unsubmitted state at the switching reference time point, and executing the reverse database operation instruction.

### Embodiment 2

This embodiment provides another distributed database cluster system. The distributed database cluster system may be used as an accepter end of data synchronization. Certainly, in a case where the distributed database cluster system is provided with a function of an initiator end of data synchronization at the same time, the distributed database cluster system may also be used as an initiator end of data synchronization, and in this case reference may be made to Embodiment 1. Fig. 4 is a schematic diagram showing the architecture of a distributed database cluster system according to Embodiment 2 of the present disclosure. As shown in Fig. 4, the distributed database cluster system may include a second data synchronization module 42 and a plurality of second database groups 44, where each second database group 44 of the plurality of second database groups 44 includes a second master database (not shown).

The second data synchronization module 42 is configured to receive an operation instruction block sent by a distributed database cluster system at a peer end. The operation instruction block includes a first operation instruction block or a second operation instruction block. Database operation instructions, which are recorded by each first master database of the distributed database cluster system at the peer end between two adjacent clock synchronization instructions, are encapsulated in the first operation instruction block. Database operation instructions, which satisfy a filtering condition, in the database operation instructions recorded by each first master database of the distributed database cluster system at the peer end between two adjacent clock synchronization instructions are encapsulated in the second operation instruction block. The filtering condition includes that the database operation instructions are in a global transaction submitted state.

The second data synchronization module 42 is further configured to execute database operation instructions in the received operation instruction block.

Through the above solution, the distributed database cluster system serving as the accepter end of data synchronization may execute, by virtue of the second data synchronization module 42, the operation instruction block sent by the distributed database cluster system at the initiator end of data synchronization, thereby completing the data synchronization process. Since for database operation instructions recorded by each master database in the first distributed database cluster system, the operation instruction block carries recorded database operation instructions between two adjacent clock synchronization instructions, so that for each master database, the data packets serving as the basis for data synchronization are ensured to have the same time reference point. Thus, the problem in the related art that data synchronized by different data nodes cannot achieve global time consistency can be solved. The data records for synchronization of different data nodes are ensured to be based on the same time reference point, thereby guaranteeing global consistency in terms of data records.

As an exemplary embodiment, the second data synchronization module 42 is configured to execute the database operation instructions in the received operation instruction block in the following manner:
persisting the database operation instructions in the received operation instruction block into a playback file; and
parsing the playback file, splitting the database operation instructions in the playback file by lines, and putting the database operation instructions into different working threads for processing.

As an exemplary implementation, the second data synchronization module 42 is configured to parse the playback file, split the database operation instructions in the playback file by lines, and put the database operation instructions into different working threads for processing in the following manner:
splitting the database operation instructions in the received operation instruction block into different data lines according to table names and primary keys, wherein database operation instructions in a same data line compose a transaction according to a sequence; and
putting database operation instructions of different transactions into different working threads for processing.

In order to get prepared for the task restoration resulted from playback failure, as an exemplary implementation, the second data synchronization module 42 may be further configured to persist a position where the database operation instructions are executed successfully into a file after the database operation instructions in the received operation instruction block are executed successfully.

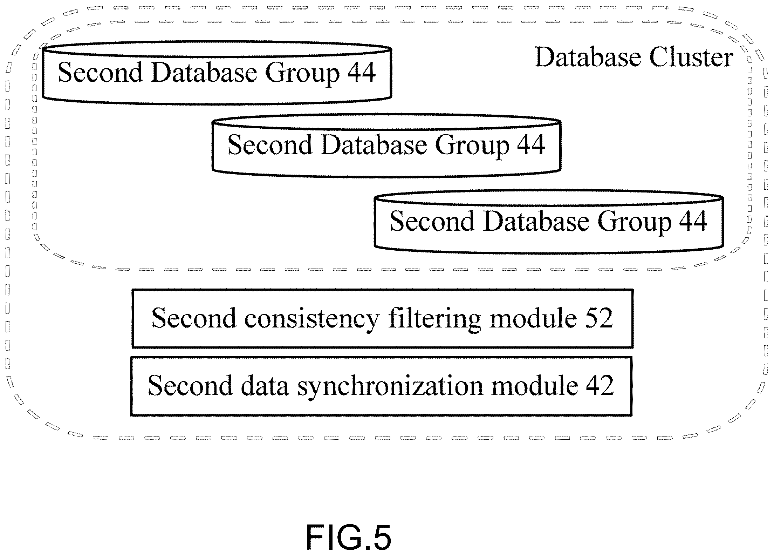

Fig. 5 is a schematic diagram showing an exemplary architecture of a distributed database cluster system according to Embodiment 2 of the present disclosure. For the final global consistency scheme, the distributed database cluster system may perform global consistency filtering when cluster switching is performed for the service. Considering that the distributed database cluster system may serve as a backup distributed database cluster system, as shown in Fig. 5, the distributed database cluster system may further include a second consistency filtering module 52.

The second data synchronization module 42 is configured to invoke the second consistency filtering module 52 when the distributed database cluster system needs to become a master distributed database cluster system in place of the distributed database cluster system at the peer end.

The second consistency filtering module 52 is configured to:
acquire a synchronization table corresponding to each second master database, determine a timestamp of a latest synchronization for each second master database according to the synchronization table, and determine an earliest timestamp from the timestamp of the latest synchronization for each second master database as a switching reference time point;
for each second master database for which the timestamp of the latest synchronization is later than the switching reference time point, roll data of the second master database back to a recorded state at the switching reference time point, and restore the data of the second master database to a globally consistent state.

As an exemplary implementation, the second consistency filtering module 52 is configured to roll the data of the second master database back to the recorded state at the switching reference time point, and restore the data of the second master database to a globally consistent state in the following manner:
generating a reverse database operation instruction for each database operation instruction after the switching reference time point, and executing the reverse database operation instruction; and
generating a reverse database operation instruction for each database operation instruction which is in a global transaction unsubmitted state at the switching reference time point, and executing the reverse database operation instruction.

### Embodiment 3

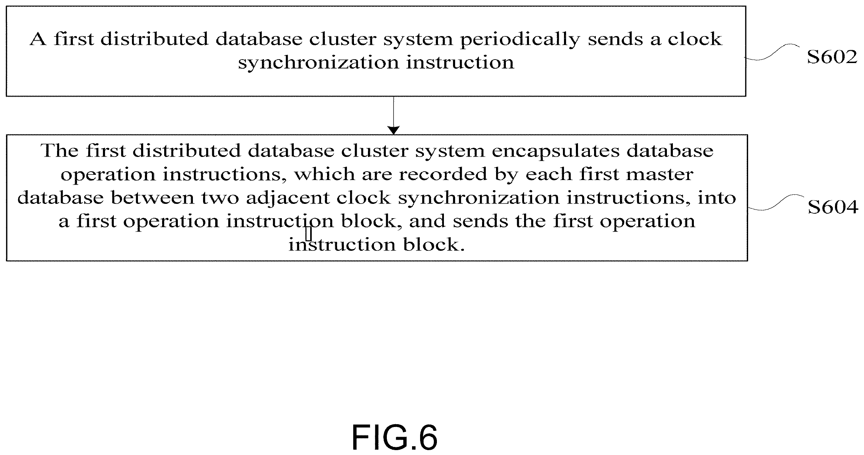

This embodiment describes a processing flow at an initiator end of data synchronization. Fig. 6 is a flowchart of a data synchronization method according to Embodiment 3 of the present disclosure. The data synchronization method is applied to a first distributed database cluster system including a plurality of first database groups 16, wherein each first database group 16 of the plurality of first database groups 16 includes a first master database. As shown in Fig. 6, the method includes the following operations S602 and S604.

In S602, the first distributed database cluster system periodically sends a clock synchronization instruction.

In S604, the first distributed database cluster system respectively encapsulates database operation instructions, which are recorded by each first master database between two adjacent clock synchronization instructions, into a first operation instruction block, and sends the first operation instruction block.

Through the above solution, the first distributed database cluster system periodically sends a clock synchronization instruction. During data synchronization, for the operation instructions recorded in each master database of the first distributed database cluster system, the database operation instructions recorded between two adjacent clock synchronization instructions are encapsulated into the first operation instruction block for sending. Thus, it is ensured that for each master database, the data packets based on which the data synchronization is performed all have the same time reference point. Thus, the problem in the related art that data synchronized by different data nodes cannot achieve global time consistency can be solved. The data records for synchronization of different data nodes are ensured to be based on the same time reference point, thereby guaranteeing global consistency in terms of data records.

There may be many manners to determine which instructions are the database operation instructions recorded by each first master database between the two adjacent clock synchronization instructions, so that the database operation instructions can be encapsulated into the first operation instruction block. An implementation that is easy to implement and does not need to greatly change the existing processing mode of the distributed database cluster system is provided as follows.

As an exemplary embodiment, the first distributed database cluster system periodically sends the clock synchronization instruction to each first master database. Before the first distributed database cluster system respectively encapsulates the database operation instructions recorded by each first master database between two adjacent clock synchronization instructions into a first operation instruction block, the method further includes: the first master database writes received database operation instructions into a log file of the first master database, and writes the received clock synchronization instruction to the log file. The operation that the first distributed database cluster system encapsulates the database operation instructions recorded by each first master database between two adjacent clock synchronization instructions into a first operation instruction block includes: the first distributed database cluster system respectively acquires the log file of each first master database, and encapsulates the database operation instructions located between two clock synchronization instructions in the log file into the first operation instruction block. In this way, the master database writes the received clock synchronization instructions and the common database operation instructions into the log file according to a normal processing manner. The first distributed database cluster system may read the log file and segment the database operation instructions according to the clock synchronization instructions in the log file, and encapsulate the database operation instructions located between two clock synchronization instructions into the first operation instruction block. In order to facilitate the log recording of the master database, a relatively common database operation statement may be adopted to generate a clock synchronization instruction, so that the master database can conveniently write the clock synchronization instruction into the log file along with common database operation statements. For an existing distributed database cluster system, a preferred database operation statement is SQL, that is, a synchronous clock SQL statement may be used as the clock synchronization instruction, and the database operation instructions may also be SQL statements.

As described above, the solution in this embodiment performs the following operations for operation instructions recorded by each master database: the database operation instructions recorded between two adjacent clock synchronization instructions are encapsulated into a first operation instruction block for sending. Thus, it is ensured that for each master database, the data packets based on which the data synchronization is performed all have the same time reference point, so that the operation instruction recording plane in the database reaches global consistency. In a case where the processing task distribution in the database cluster is relatively balanced or the processing resource bandwidth is sufficient, the execution duration of each operation instruction is very small and the operation instructions are under a relatively uniform distribution. In this case, global consistency can substantially be achieved at the execution layer of the database. In a practical distributed database cluster system, there may occasionally be a case where the processing task distribution in the database cluster is less unbalanced or the processing resource bandwidth is small. In this case, there may be differences in the execution states of different processing tasks in the same database cluster. In this case, at least one of the following two processing manners (final global consistency and real-time global consistency) may be adopted to ensure global consistency of the database in the execution layers.

### Final global consistency scheme

In this solution, the first distributed database cluster system sends the first operation instruction block to the second distributed database cluster system. In this case, the first operation instruction block sent to the second distributed database cluster system contains database operation instructions recorded in the master database between two synchronous clock signals and no consistency filtering is performed for these database operation instructions. The data synchronization module of the second distributed database cluster system normally synchronizes these database operation instructions to the corresponding master database of the second distributed database cluster system. However, the second distributed database cluster system performs global consistency filtering when cluster switching is performed for the service. This embodiment is suitable for scenarios where the disaster recovery system has high requirements on RPO indexes, since in this scheme data can be efficiently transmitted to a peer cluster and persisted, thereby ensuring that the RPO is as small as possible. A specific implementation of performing a global consistency filtering at the accepter end of data synchronization when cluster switching is performed for the service in this processing mode may refer to Embodiment 8.

### Real time global consistency scheme

According to the real-time global consistency scheme, the first distributed database cluster system performs global consistency filtering on the first operation instruction block, encapsulates the database operation instructions, which satisfy the filtering condition, in the first operation instruction block into a second operation instruction block, and sends the second operation instruction block to a second distributed database cluster system. The filtering condition includes that the database operation instructions are in a global transaction submitted state. Through this scheme, the database operation instructions that have not been executed (i.e., in a global transaction unsubmitted state) may be filtered from the first operation instruction block, and only the database operation instructions that have been executed are reserved and encapsulated into a second operation instruction block and sent to the second distributed database cluster system. In this way, the second distributed database cluster system synchronizes data that has been executed by the current first distributed database cluster system, so that the data synchronized to the backup cluster is always in a consistent state. This embodiment is suitable for scenarios where the disaster backup system has high requirements on RTO indexes. The service may take over the peer distributed database cluster at any time, and the RTO may be equal to zero. A specific implementation of performing global consistency filtering in real time at the synchronization initiator in this processing mode may refer to Embodiment 8.

Considering that in the scenarios of incremental data subscription and incremental data extraction, the second distributed database cluster system has a filtering requirement for received data and only data objects (databases, tables, etc.) satisfying a specific condition need to be sent to the second distributed database cluster system. Therefore, a filtering condition may be added, for example, the filtering condition may further include that the database operation instructions comply with a data object filtering rule corresponding to the second distributed database cluster system.

For database operation instructions that have not been executed (i.e., in a global transaction unsubmitted state), the first distributed database cluster system buffers database operation instructions, which are in a global transaction unsubmitted state, in the first operation instruction block, adds the buffered database operation instructions to the next first operation instruction block corresponding to the current first master database, and then performs global consistency filtering on the next first operation instruction block.

In order to perform global transaction management inside the first distributed database cluster system, so that the first distributed database cluster system can conveniently determine whether a database operation instruction is currently in a global submitted state or not, some improvement can be made to the first distributed database cluster system. The first distributed database cluster system manages a global transaction identification (ID) capable of uniquely identifying a global transaction, and records a state and a life cycle of each global transaction.

The first distributed database cluster system manages and periodically requests a current active transaction list of each first master database, records the current active transaction list and a timestamp for acquiring the current active transaction list in a synchronization table corresponding to the first master database, and puts the timestamp and information of the current active transaction list in the clock synchronization instruction sent to the first master database.

The first distributed database cluster system performs global consistency filtering on the first operation instruction block, and encapsulates database operation instructions, which satisfy a filtering condition, in the first operation instruction block into a second operation instruction block in the following manner: the first distributed database cluster system searches for a latest current active transaction list recorded in the synchronization table corresponding to a current first master database, removes database operation instructions corresponding to global transaction IDs in the latest current active transaction list, and encapsulates remaining database operation instructions into the second operation instruction block as the database operation instructions, which satisfy the filtering condition, in the global transaction submitted state.

As an exemplary implementation, before data synchronization processing is performed, a synchronization position between the second distributed database cluster system at the peer end and the current first distributed database cluster system may be acquired. Before the first distributed database cluster system respectively encapsulates the database operation instructions recorded by each first master database between two adjacent clock synchronization instructions into a first operation instruction block, the method may further include: the first distributed database cluster system receives synchronization position request information sent by the second distributed database cluster system, wherein the synchronization position request information carries a synchronization position between the first distributed database cluster system and the second distributed database cluster system. The first distributed database cluster system may encapsulate the database operation instructions recorded by each first master database between two adjacent clock synchronization instructions into a first operation instruction block in the following manner: the first distributed database cluster system encapsulates the database operation instructions recorded by each first master database according to the synchronization position carried in the synchronization position request information.

The embodiment further provides a storage medium, where a computer program is stored in the storage medium, and the computer program, when being executed, performs the method described in this embodiment.

### Embodiment 4

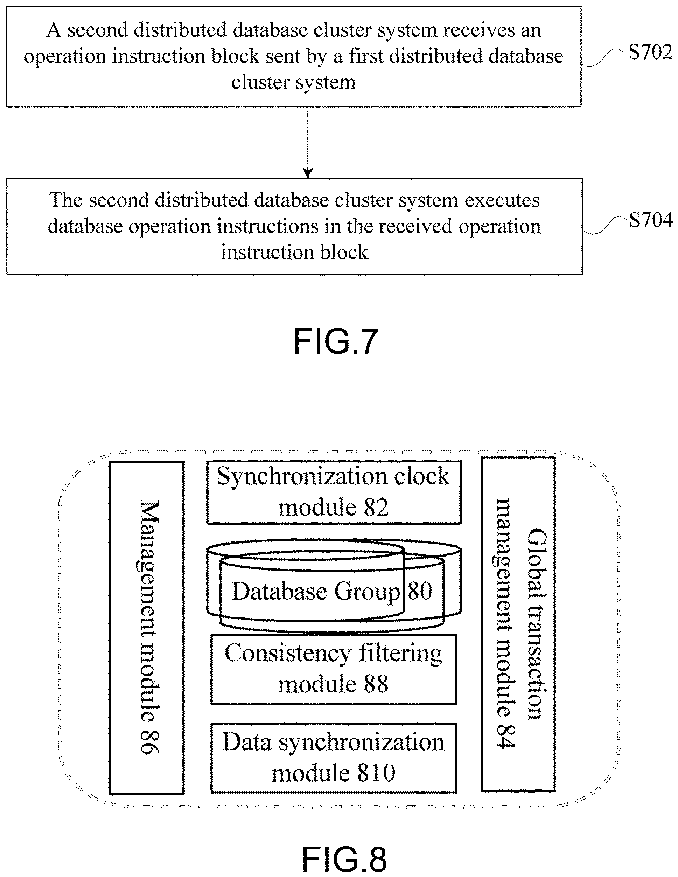

This embodiment describes a processing flow of an accepter end of data synchronization. Fig. 7 is a flowchart of a data synchronization method according to Embodiment 4 of the present disclosure. The data synchronization method may be applied to a second distributed database cluster system including a plurality of second database groups 44, wherein each second database group 44 of the plurality of second database groups 44 includes a second master database. The method may include the following operations S702 and S704.

In S702, the second distributed database cluster system receives an operation instruction block sent by a first distributed database cluster system. The operation instruction block includes a first operation instruction block or a second operation instruction block. Database operation instructions, which are recorded by each first master database of the first distributed database cluster system between two adjacent clock synchronization instructions, are encapsulated in the first operation instruction block. Database operation instructions, which satisfy a filtering condition, in the database operation instructions recorded by each first master database of the first distributed database cluster system between two adjacent clock synchronization instructions are encapsulated in the second operation instruction block. The filtering condition includes that the database operation instructions are in a global transaction submitted state.

In S704, the second distributed database cluster system executes database operation instructions in the received operation instruction block.

Through the above solution, the second distributed database cluster system, serving as the accepter end of the data synchronization, may execute database operation instructions according to the operation instruction block sent by the first distributed database cluster system of the initiator end of the data synchronization, so as to complete the data synchronization procedure. Among the operation instructions recorded in each master database of the first distributed database cluster system, the database operation instructions recorded between two adjacent clock synchronization instructions are carried the transmitted operation instruction block. Thus, it is ensured that for each master database, the data packets based on which the data synchronization is performed all have the same time reference point. Thus, the problem in the related art that data synchronized by different data nodes cannot achieve global time consistency can be solved. The data records for synchronization of different data nodes are ensured to be based on the same time reference point, thereby guaranteeing global consistency in terms of data records.

As an exemplary embodiment, the second distributed database cluster system may execute the database operation instructions in the received operation instruction block in the following manner:
the second distributed database cluster system persists the database operation instructions in the received operation instruction block into a playback file; and
the second distributed database cluster system parses the playback file, splits the database operation instructions in the playback file by lines, and puts the database operation instructions into different working threads for processing.

As an exemplary implementation, the second distributed database cluster system may parse the playback file, split the database operation instructions in the playback file by lines, and put the database operation instructions into different working threads for processing in the following manner:
the second distributed database cluster system splits the database operation instructions in the received operation instruction block into different data lines according to table names and primary keys, wherein database operation instructions in a same data line compose a transaction according to a sequence; and
the second distributed database cluster system puts database operation instructions of different transactions into different working threads for processing.

In order to get prepared for the task restoration resulted from playback failure, as an exemplary implementation, after the second distributed database cluster system executes the database operation instructions in the received operation instruction block successfully, the method may further include: the second distributed database cluster system persists a position where the database operation instructions are executed successfully into a file.

For the final global consistency scheme, the second distributed database cluster system may perform global consistency filtering cluster switching is performed for the service. Considering that the second distributed database cluster system may serve as a backup distributed database cluster system, in a case where the second distributed database cluster system needs to become a master distributed database cluster system in place of the first distributed database cluster system, the method may further include:
the second distributed database cluster system acquires a synchronization table corresponding to each second master database, determines a timestamp of a latest synchronization for each second master database according to the synchronization table, and determines an earliest timestamp from the timestamp of the latest synchronization for each second master database as a switching reference time point;
for each second master database for which the timestamp of the latest synchronization is later than the switching reference time point, the second distributed database cluster system rolls data of the second master database back to a recorded state at the switching reference time point, and restores the data of the second master database to a globally consistent state.

As an exemplary implementation, the second distributed database cluster system rolls data of the second master database back to a recorded state at the switching reference time point, and restores the data of the second master database to a globally consistent state in the following manner:
the second distributed database cluster system generates a reverse database operation instruction for each database operation instruction after the switching reference time point, and executes the reverse database operation instruction; and
the second distributed database cluster system generates a reverse database operation instruction for each database operation instruction in a global transaction unsubmitted state at the switching reference time point, and executes the reverse database operation instruction.

This embodiment further provides a storage medium, where a computer program is stored in the storage medium, and the computer program, when being executed, performs the method described in this embodiment.

### Embodiment 5

This embodiment describes a distributed database data synchronization apparatus and method that ensure global consistency. Fig. 8 is a schematic diagram showing the architecture of a distributed database data synchronization apparatus for ensuring global consistency according to Embodiment 5 of the present disclosure. As shown in Fig. 8, the distributed database data synchronization apparatus for ensuring global consistency in the embodiment of the present disclosure includes modules described as follows.

A distributed database cluster is constituted by a plurality of database groups 80. Each database group 80 is constituted by a plurality of independent database nodes, data in the database nodes within a database group is completely consistent, and only one database node (which is referred to as a master database) in the database group provides a writing service to the outside device, and other data nodes (which are referred to as backup databases) synchronize the data to the local through a replication technology between the databases. A database function is provided to an application in a data service manner, and a unified standard interface such as an SQL is provided to the application.

A synchronization clock module 82 is configured to periodically send an SQL statement to each master data node in the distributed database, and the information carried in the SQL statement includes a timestamp of the synchronization clock module 82 and a current global active transaction list.

A global transaction management module 84 is configured to uniformly manage a globally unique transaction ID, which uniquely identifies a global transaction, in a distributed environment, and meanwhile record a state and a life cycle of each global transaction. Each transaction in the cluster applies to the global transaction management module 84 to create a unique transaction ID, and is inserted into data lines.

A management module 86 is configured to uniformly manage networking information of the distributed database cluster.

A consistency filtering module 88 performs global consistency filtering on the data by using the global active transaction ID and filters out SQL statements containing a specified data object (library, table) according to the filtering rule.

A data synchronization module 810 is configured to collect a log of a master database node in the distributed database, generate SQL statements by parsing the log, package and transmit an SQL statement block message, persist the SQL message and perform parallel playback of the SQL lines.

Based on the above architecture, in the data synchronization process, a synchronization table is firstly established in the active and backup clusters, and the synchronization table mainly includes two types of information: timestamp information and a global active transaction list. The synchronization clock module 82 periodically requests the current active transaction list from the global transaction management module 84. After acquiring the response from the global transaction management module 84, the synchronization clock module 82 sends an insertion statement to all the master databases in the master cluster to insert the timestamp for acquiring the current active global transaction list and the information of the current active global transaction list. The data synchronization module 810 of the master cluster periodically collects the log files of the master data nodes in the master cluster. After receiving a synchronization request from the backup cluster, the data synchronization module 810 inversely parses the log files to generate the SQL statements, segments the SQL statement stream according to the synchronization clock, performs consistency filtering and specified rule-based filtering on the SQL statements by using the consistency module, and finally encapsulates the SQL statements after the filtering in a sending queue. A sending thread then sends the messages in the sending queue to the data synchronization module 810 in the backup cluster. After receiving the SQL block message, the data synchronization module 810 in the backup cluster places the SQL messages into a receiving queue in the memory, invokes a writing thread to persist the SQL statement block in the receiving queue into the file, then starts a playback thread to split the statement block in the file into several tasks, and sends the data to a working thread to synchronize the data to the database node of the backup cluster.

Through the above process, the log file of each data node in the master cluster is sliced according to a unified time within the cluster, and the transactions in the slices are processed uniformly on the main/backup cluster according to different service scenarios to make the transaction to simultaneously succeed or simultaneously fail in the main and backup clusters, thereby ensuring that the data on the backup cluster are in real-time consistency or final consistency. On this basis, the backup cluster may distribute the transactions in the slices according to the table name and the primary key value, and multi-thread execution can be performed in parallel, thereby solving the problem of low playback performance caused by insufficient concurrent shortage.

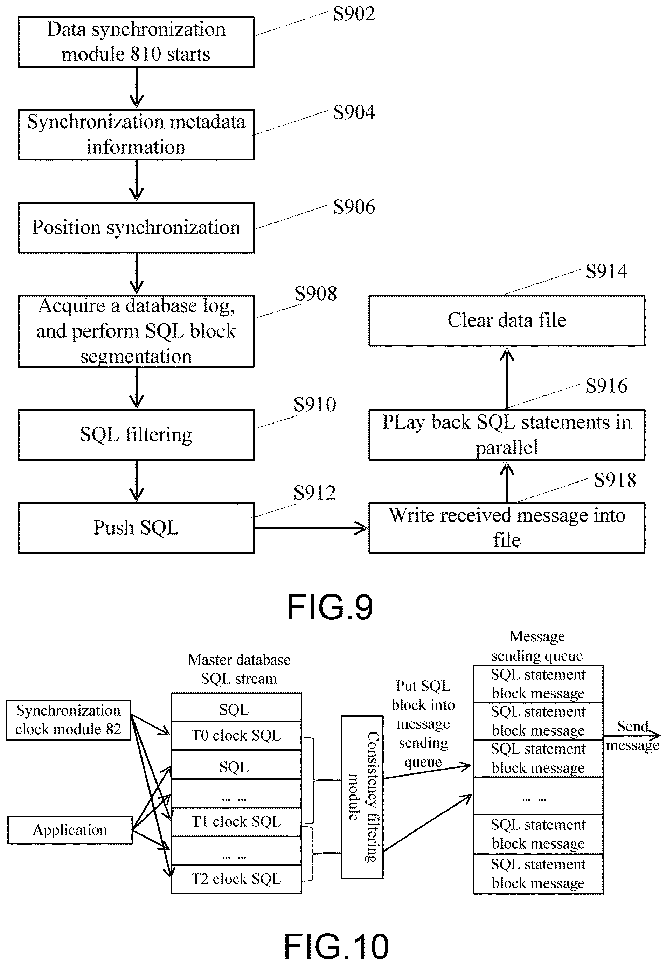

Fig. 9 is a detailed working flowchart of a data synchronization method according to Embodiment 5 of the present disclosure. As shown in Fig. 9, the distributed database data synchronization method for ensuring global consistency includes the following operations S902 to S918.

In S902, when the data synchronization module 810 of the master cluster is started, a task thread for periodically acquiring metadata is initialized, and the database node connected to the data synchronization module 810 is ensured to be the master node in the database group 80. A boot thread reports the status to the management node periodically. When the data synchronization module 810 of the backup cluster is started, a concurrent working thread pool is initialized according to a configuration file, a message writing thread, an SQL playback thread and a garbage cleaning thread are initialized. After the initialization, a log synchronization position is firstly sent to the data synchronization module 810 of the master cluster.

In S904, the data synchronization module 810 of the master cluster periodically sends a cluster networking data acquisition/synchronization request to the management module 86, and after receiving the response from the management module 86, compares the same with the data in the memory. If the data in the memory is empty, the memory structure is initialized with the current data. If there is data in the memory, whether the data is consistent is compared according to the sequence of the database group 80, and if the data is consistent, no processing is conducted, and if the data is not consistent, it is determined whether the data information is updated immediately according to whether the database node is connected.

In S906, after the data synchronization module 810 of the master cluster starts and synchronizes the networking information of the clusters, the data synchronization module 810 of the master cluster waits for the data synchronization module 810 of the backup cluster to push the synchronization position request information, and after receiving the synchronization position information, starts a new task according to the current position.

In S908, the data synchronization module 810 of the master cluster initiates a database connection according to the synchronization position, initializes the memory for parsing the log file, receives the log information pushed by the database, and then enters the SQL statement block segmentation process described in Embodiment 6. The SQL statement block is sent to the consistency filtering module 88 according to practical deployment.

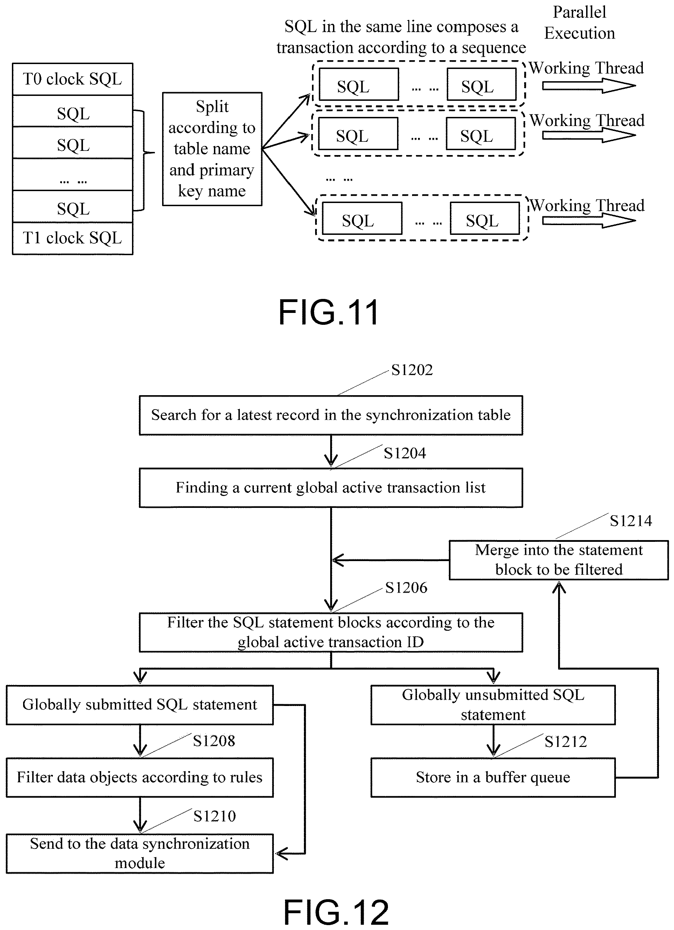

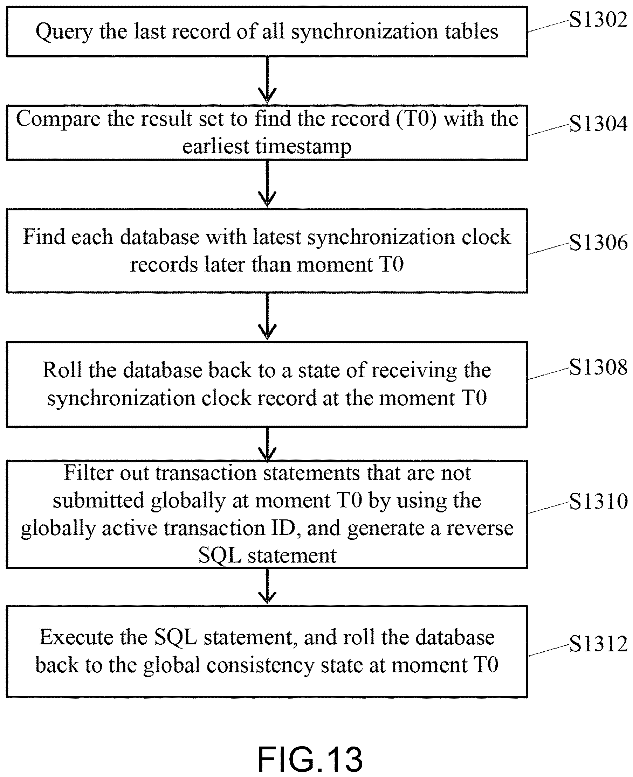

In S910, global consistency filtering and rule filtering are performed on the SQL statement block. For specific flow, reference may be made to Fig. 12 or Fig. 13 in Embodiment 8.

In S912, when receiving the SQL statement block request sent by the data synchronization module 810 of the backup cluster, the data synchronization module 810 of the master cluster firstly determines whether the message needs to be retransmitted, if the message needs to be retransmitted, the data synchronization module 810 of the master cluster directly sends the messages in the sending queue, and if the message does not need to be retransmitted, messages are extracted from the sending buffer queue and then sent to the data synchronization module 810 of the master cluster.

In S914, after receiving the message packet, the data synchronization module 810 of the backup cluster puts the message into the receiving list. Packet checking is performed. Then the SQL statement block message is put into a writing queue, the writing thread persists the message from the writing queue into the SQL playback file, and then checks whether there is a message blocked in the receive queue. If there is a message blocked in the receive queue, the suspended thread is woken up, otherwise, whether the current message group ends is judged, and the data synchronization position is updated and the writing queue is read cyclically.

In S916, the SQL playback thread of the data synchronization module 810 of the backup cluster parses the SQL playback file, and parses the transaction statement blocks between the two synchronization clocks and splits the transaction statement blocks according to lines. For a specific method, reference may be made to the SQL parallel processing flow described in Embodiment 7. After the statement blocks are played back successfully in parallel, the data playback position is persisted in the file so that the data playback position can be used when the playback is abnormal.

In S918, the data cleaning thread of the data synchronization module 810 of the backup cluster periodically cleans the data that has exceeded the saving time and has been successfully played back.

In summary, the method provides a unified clock for the whole cluster through the synchronization clock module 82, and performs unified slicing processing on the data. The consistency filtering module 88 performs global consistency filtering on the data of the slices. Meanwhile, requirements on disaster recovery indexes, such as RPO (Restoration Point Object, i.e., how much data lost can the system maximally tolerate) and RTO (Restoration Time Object, i.e., the time required by the system to recover from disaster), as well as requirements of services on data filtering and extraction, are considered, Different orchestrations of the synchronization clock module 82, the global transaction management module 84, the consistency filtering module 88, and the data synchronization module 810 can efficiently satisfy a plurality of service scenarios, such as multi-active in the same city, disaster recovery in different locations, data subscription and data extraction. Meanwhile, global consistency between data clusters in a distributed environment is ensured, so that the clusters in different locations can quickly take over services. The solution is a function with extremely useful characteristic, and can greatly facilitate the promotion of the distributed database in the financial field, the Internet field and the education field.

### Embodiment 6

Fig. 10 is a schematic diagram of splitting and encapsulating of SQL statements according to Embodiment 6 of the present disclosure. As shown in Fig. 10, the procedure is described as follows.

The synchronization clock module 82 periodically sends a synchronization clock SQL statement to the database. The corresponding statement will eventually be recorded in the database log.

After receiving the log pushed by the database, the data synchronization module 810 parses the log, and segments the application SQL by using the synchronization clock SQL statement. The specific implementation manner is that all SQLs between two synchronization clock SQL statements are considered as a message block, and are encapsulated into an SQL statement block.

After the statement block is filtered, the statement block is packed and put into the sending buffer queue, and then the sending thread sends the SQL statement message from the buffer queue to the data synchronization module 810 at the peer end.

### Embodiment 7

Fig. 11 is a flowchart of parallel processing of SQL statement lines according to Embodiment 7 of the present disclosure. As shown in Fig. 11, the SQL statement block is divided into a plurality of transactions according to data lines, and the specific implementation is described as follows.

The data lines are selected according to table names and primary keys, the SQLs of the same data line compose a transaction according to a sequence, and the SQLs of different data lines are sent to different working threads for processing.

The working thread processes a batch of SQL statements in parallel to ensure successful playback, and then reads the next SQL statement block.

### Embodiment 8

This embodiment describes the specific process of a real-time global consistency filtering procedure and a final global consistency filtering procedure.

Fig. 12 is a flowchart of real-time global consistency filtering according to Embodiment 8 of the present disclosure, and the flowchart is described as follows.

In S1202, a latest record is found from a synchronization table.

In S1204, a global active transaction list at the latest synchronization is acquired from the record.

In S1206, the SQL statement block is filtered by using the global active transaction ID.

In S1208, whether there is a configuration data object filtering rule for the SQL statements submitted globally in the statement block is determined, if yes, operation S1210 is performed, if no, the SQL statements are submitted to the sending queue.

In S1210, the involved SQL statements are filtered according to the filtering rule, and then the remaining SQL statements are submitted to a sending queue.

In S1212, SQL statements that are not globally submitted are stored in a buffer queue.

In S1214, before filtering the next batch of statements, the SQL statements in the buffer queue are combined into the statement block.

Fig. 13 is a flowchart of final global consistency filtering according to Embodiment 8 of the present disclosure, and the flowchart is described as follows.

In S1302, when it is necessary to perform master-backup cluster switching, the backup cluster finds the clock record of the latest synchronization from the synchronization table of all data nodes.

In S1304, all the clock records of the latest synchronization are compared to find the time (T0) of the synchronization clock records with the earliest timestamp as the consistency point of switching.

In S1306, all data nodes receiving a synchronization clock message later than the moment T0 are found.

In S 1308, all reverse SQL statements for restoring back to the moment T0 are generated by parsing the log file, and the SQL statements are executed to roll the node data back to the moment of receiving the moment T0 synchronization clock message, so that the data of all the nodes in the cluster are aligned to the same time point (moment T0).

In S1310, the corresponding SQL statements in the log file of the backup cluster data node are filtered out by using the current global active transaction ID at the time point (T0) in the synchronization clock table. Although these statements are submitted at a single point, the transaction is not globally submitted. These transactions are in a global active state.

In S1312, reverse SQL statements are generated and executed, and finally the backup cluster of the distributed database reaches a globally consistent state.

Examples 9 to 12 below describe specific processing flows when the method of the present disclosure is applied in different scenarios.

### Embodiment 9

This embodiment describes distributed database asynchronous data synchronization under a high performance mode (i.e.,, the final global consistency scheme).

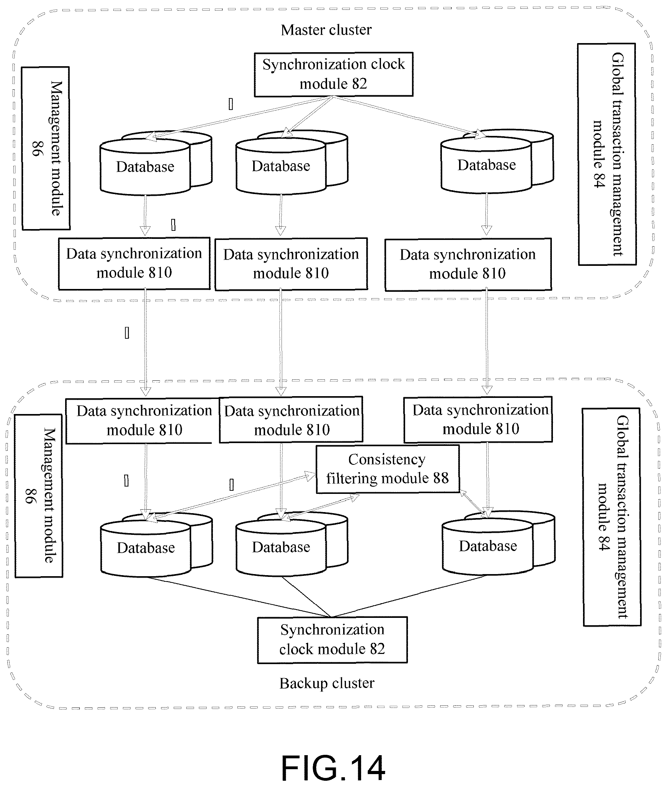

Fig. 14 is a system architecture diagram for data synchronization of a distributed database cluster under a high performance mode according to Embodiment 9 of the present disclosure.

As shown in Fig. 14, in this embodiment, there are two cluster systems. The master distributed database cluster will synchronize data to the backup cluster, and the networking of the two clusters is consistent. In the data synchronization process, the consistency filtering is not performed, and the global consistency filtering is performed only when the service switches the cluster. The processing of the distributed database asynchronous data synchronization under the high performance mode includes the following operations.
1. The synchronization clock module 82 sends a synchronization SQL statement to the database.
2. The database pushes the log file to the data synchronization module 810 periodically.
3. After receiving the log pushed by the database, the data synchronization module 810 parses the log, and takes all SQLs between two synchronization SQLs as a message block and encapsulates these SQLs into an SQL statement block. After the SQL statement block is packed and compressed, the SQL statement block is put into the sending buffer queue, and then the sending thread sends the SQL statement message from the buffer queue to the data synchronization module 810 at the peer end.
4. After receiving the message packet, the data synchronization module 810 of the backup cluster puts the message into the receiving list. After checking is conducted on the message packet, the SQL statement block message is persisted to the SQL playback file, and then the SQL playback thread parses the SQL playback file, and the transaction statement blocks between two synchronization messages are parsed and split according to lines, and the SQL statements are played back in parallel, thereby achieving the data synchronization.
5. The consistency filtering module 88 is enabled only when master and backup cluster switching is required. The filtering operations are shown in Fig. 13.

This embodiment is suitable for scenarios where the disaster recovery system has high requirements on RPO indexes, since in this scheme data can be efficiently transmitted to a peer cluster and persisted, thereby ensuring that the RPO is as small as possible.

### Embodiment 10

This embodiment describes distributed database cluster data synchronization under a high performance mode (i.e., a real-time global consistency scheme).

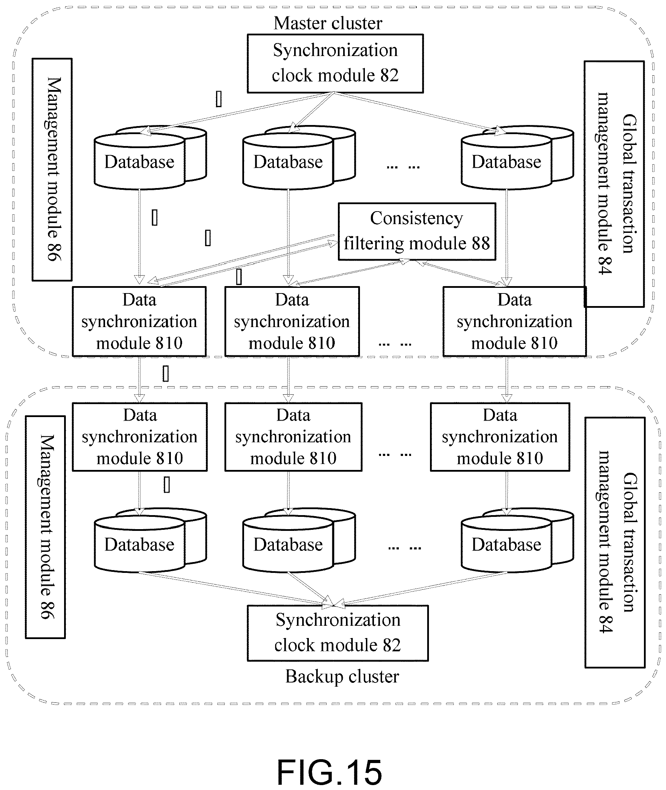

Fig. 15 is a system architecture diagram for data synchronization of a distributed database cluster under a high performance mode according to Embodiment 10 of the present disclosure.

As shown in Fig. 15, in this embodiment, there are two database cluster systems. The master database cluster will synchronize data to the backup cluster, and the networking of the two clusters is consistent. In the data synchronization process, consistency filtering is performed, so that the data synchronized to the backup cluster is constantly in the consistency state. The processing in the distributed database cluster data synchronization under the high performance mode includes the following operations.
1. The synchronization clock module 82 sends synchronization SQL statements to the database.
2. The database pushes the log file to the data synchronization module 810 periodically.
3. After receiving the log pushed by the database, the data synchronization module 810 parses the log, and takes all SQLs between two synchronization SQLs as a message block and encapsulates these SQLs into an SQL statement block.
4. The consistency filtering module 88 filters out statements in a global transaction submitted state in the statement block by using the global active transaction ID, and reference is made to Fig. 12 for a specific process.
5. After packaging and compressing the SQL statement block that has been in the global transaction submitted state, the SQL statement block is put into the sending buffer queue, and then the sending thread takes out the SQL statement message from the buffer queue and sends the SQL statement message to the data synchronization module 810 at the peer end.
6. After receiving the message packet, the data synchronization module 810 of the backup cluster puts the message into the receiving list. After checking is conducted on the message packet, the SQL statement block message is persisted to the SQL playback file, and then the SQL playback thread parses the SQL playback file, and the transaction statement blocks between two synchronization messages are parsed and split according to lines, and the SQL statements are played back in parallel, thereby achieving the data synchronization. Since each synchronized SQL statement block is globally consistent, the data in the backup cluster database is always in a globally consistent state.

This embodiment is suitable for scenarios where the disaster backup system has high requirements on RTO indexes. The service may take over the distributed database cluster at the peer end at any time, and the RTO may be equal to zero.

### Embodiment 11

This embodiment describes data synchronization (quasi-real-time backup) under incremental data subscription based on a distributed database.

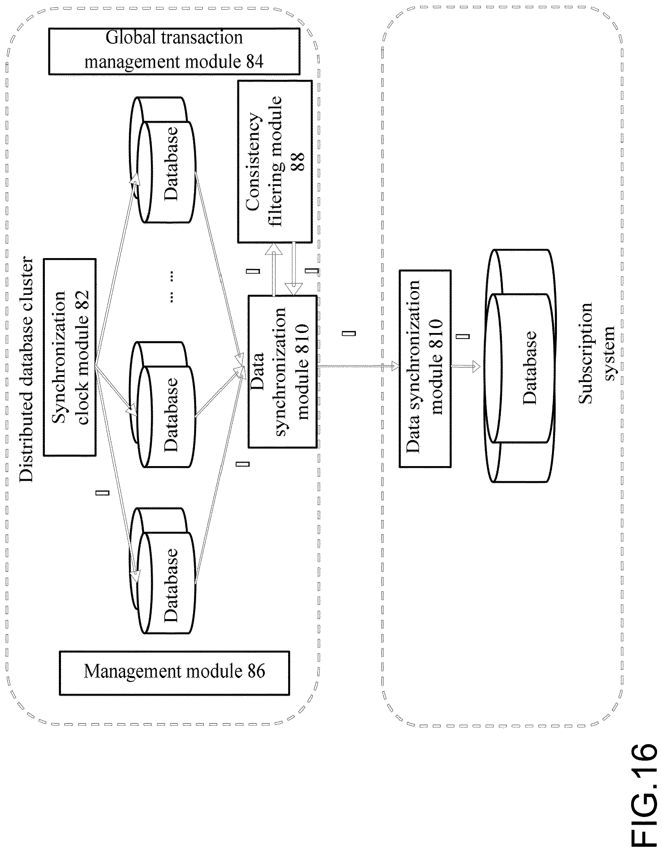

Fig. 16 is a schematic diagram showing the system architecture of a distributed database quasi-real-time backup according to Embodiment 11 of the present disclosure. As shown in Fig. 16, in this embodiment, there are two database clusters. A remote database cluster serves as a database cluster subscribing to the service system cluster, and the networking of the two clusters may be inconsistent. The process of quasi-real-time backup under incremental data subscription based on the distributed database includes the following operations.
1. The synchronization clock module 82 periodically sends a synchronization SQL statement to the database.
2. The database pushes the log file to the data synchronization module 810 periodically.
3. After receiving the log pushed by the database, the data synchronization module 810 parses the log, and takes all SQLs between two synchronization SQLs as a message block and encapsulates these SQLs into an SQL statement block.
4. The consistency filtering module 88 buffers, according to the global active transaction ID, the SQL statements, which are globally active, in the statement block into the active statement queue, and merges these SQL statements into the statement block when filtering the next statement block. In this way, the filtered SQL statements are all statements in the global transaction submitted state. The involved data objects (databases, tables) are then filtered according to subscription rules.
5. The filtered SQL statement blocks that are in the global transaction submitted state are packaged and compressed and put into the sending buffer queue, and then the sending thread extracts the SQL statement messages from the buffer queue and sends the SQL statement messages to the data synchronization module 810 at the peer end.
6. After receiving the message packet, the data synchronization module 810 of the remote cluster puts the message into the receiving list. After checking is conducted on the message packet, the SQL statement block messages are persisted into the SQL playback file. The SQL playback thread parses the SQL playback file, parses and splits by lines the transaction statement blocks between two synchronization messages, and plays back the SQL statements in parallel according to the networking condition of the cluster, thereby achieving the purpose of quasi-real-time data backup.

### Embodiment 12

This embodiment describes data synchronization (data extraction) based on distributed database incremental data.

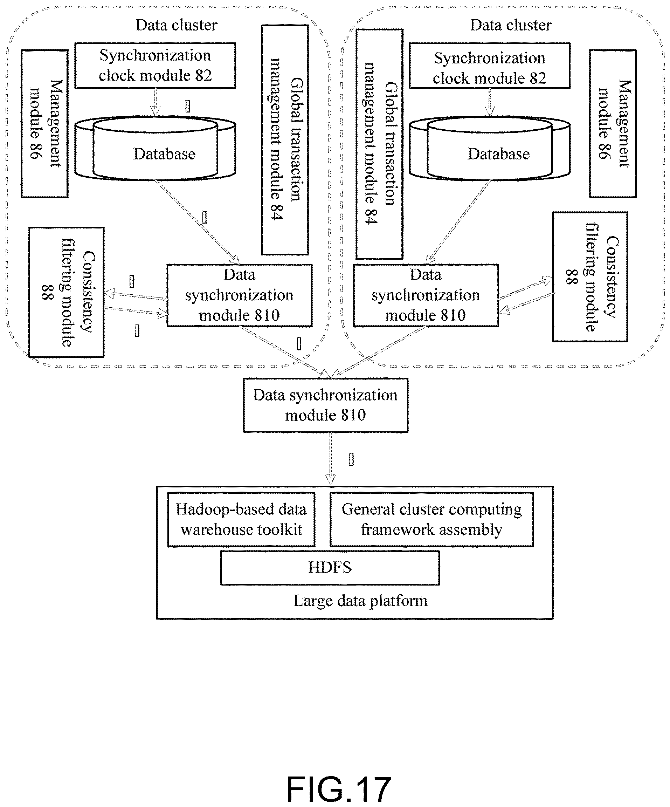

Fig. 17 is a schematic diagram showing the system architecture of data extraction based on distributed database incremental data according to Embodiment 12 of the present disclosure. As shown in Fig. 17, in this embodiment, there are two types of service systems: an Online Transactional Processing system (OLTP) that generates data, and an Online Analytical Processing system (OLAP) and a Data Warehouse system (BI) that are mainly used for data analysis services. A large data platform (including, for example, a Hadoop-based data warehouse toolkit Hive, a universal cluster computing framework (Spark) assembly (Spark SQL) used for structured data processing, and a distributed file system of Hadoop (Hadoop Distribute File System, abbreviated as HDFS)) for online data analysis is illustrated in the figure. The OLTP system imports data into a large data platform for the large data platform to perform analysis and mining. Data extraction based on distributed database incremental data includes the following operations.
1. The synchronization clock module 82 sends the synchronization SQL statement to the database periodically.
2. The OLTP type service database cluster periodically pushes the log file to the data synchronization module 810.
3. After receiving the log pushed by the database, the data synchronization module 810 parses the log, and takes all SQLs between two synchronization SQLs as a message block and encapsulates these SQLs into an SQL statement block.
4. The consistency filtering module 88 buffers, according to the global active transaction ID, the SQL statements, which are globally active, in the statement block into the active statement queue, and merges these SQL statements into the statement block when filtering the next statement block. In this way, the filtered SQL statements are all statements in the global transaction submitted state. The involved data objects (databases, tables) are then filtered according to data extraction rules.
5. The filtered SQL statement blocks that are in the global transaction submitted state are packaged and compressed and put into the sending buffer queue, and then the sending thread extracts the SQL statement messages from the buffer queue and sends the SQL statement messages to the data synchronization module 810 at the large data platform end.
6. After receiving the message packet, the data synchronization module 810 at the large data platform puts the message into the receiving list. After checking is conducted on the message packet, the SQL statement block messages are persisted into the SQL playback file. The SQL playback thread parses the SQL playback file, parses and splits by lines the transaction statement blocks between two synchronization messages, and plays back the SQL statements into the data computation layer of the large data platform in parallel. The computation layer performs SQL computation, and updates the data computation result to the storage system of the large data platform.

To sum up, according to the distributed database cluster system and the data synchronization method provided by the embodiments of the present disclosure, the application of the distributed database cluster in the fields of teaching, financial, government and enterprise, Internet, etc. can be enlarged, system resource investment is saved, system performance is improved, data consistency is ensured, and user experience is improved. The solution is beneficial for the promotion of distributed databases.

It is apparent that those skilled in the art should know that each module or each step of the present invention may be implemented through a universal computing device. They may be concentrated in a single computing device or distributed in a network formed by multiple computing devices. In at least one exemplary embodiment, they may be implemented by program codes executable for the computing devices and thus may be stored in a storage device for execution with the computing devices. Moreover, in some cases, the shown or described operations may be executed in sequences different from those described here, or may form various integrated circuit modules respectively, or multiple modules or operations therein may form a single integrated circuit module for implementation. Therefore, the present invention is not limited to any specific hardware and software combination.

The above is only the exemplary embodiment of the present invention and not intended to limit the present invention. For those skilled in the art, the present invention may have various modifications and variations.

## Claims

1. A distributed database cluster system, comprising: a first synchronization clock module (12), a first data synchronization module (14) and a plurality of first database groups (16), wherein each first database group (16) of the plurality of first database groups (16) comprises a first master database,
the first synchronization clock module (12) is configured to periodically send a clock synchronization instruction to each first master database (S602); and
the first data synchronization module (14) is configured to respectively encapsulate database operation instructions, which are recorded by each first master database between two adjacent clock synchronization instructions sent by the first synchronization clock module (12), into a first operation instruction block, and send the first operation instruction block(S604), wherein
the first synchronization clock module (12) is configured to periodically send the clock synchronization instruction to each first master database;
the first master database is configured to write received database operation instructions into a log file of the first master database, and write the received clock synchronization instruction into the log file; and
the first data synchronization module (14) is configured to respectively acquire the log file of each first master database, encapsulate the database operation instructions located between two adjacent clock synchronization instructions in the log file into the first operation instruction block, and send the first operation instruction block, wherein the distributed database cluster system further comprises: a first consistency filtering module (22), wherein the first data synchronization module (14) is configured to send the first operation instruction block to the first consistency filtering module (22); and the first consistency filtering module (22) is configured to receive the first operation instruction block sent by the first data synchronization module (14), perform global consistency filtering on the first operation instruction block, encapsulate database operation instructions, which satisfy a filtering condition, in the first operation instruction block into a second operation instruction block, and send the second operation instruction block to a distributed database cluster system at a peer end, wherein the filtering condition comprises that the database operation instructions are in a global transaction submitted state; or, the filtering condition comprises that the database operation instructions are in the global transaction submitted state and that the database operation instructions comply with a data object filtering rule corresponding to the distributed database cluster system at the peer end;
wherein when the distributed database cluster system further comprises the first consistency filtering module (22), the first consistency filtering module (22) is further configured to:
buffer database operation instructions, which are in a global transaction unsubmitted state, in the first operation instruction block, and when a next first operation instruction block corresponding to a current first master database sent by the first data synchronization module (14) is received, add the buffered database operation instructions to the first operation instruction block and then perform global consistency filtering on the first operation instruction block, wherein the global transaction submitted state refers to the instructions that have been executed, the global transaction unsubmitted state refers to the instructions that have not been executed.

2. The distributed database cluster system as claimed in claim 1, wherein the first data synchronization module (14) is configured to send the first operation instruction block to a distributed database cluster system at a peer end;

3. The distributed database cluster system as claimed in claim 1, wherein when the distributed database cluster system further comprises the first consistency filtering module (22), the distributed database cluster system further comprises: a global transaction management module (32), wherein
the global transaction management module (32) is configured to manage a global transaction identifier (ID) capable of uniquely identifying a global transaction, and record a state and a life cycle of each global transaction;
the first synchronization clock module (12) is configured to request a current active transaction list of each first master database periodically, record the current active transaction list and a timestamp for acquiring the current active transaction list in a synchronization table corresponding to the first master database, and put the timestamp and information of the current active transaction list in the clock synchronization instruction sent to the first master database; and
the first consistency filtering module (22) is configured to search for a latest current active transaction list recorded in the synchronization table corresponding to a current first master database, remove database operation instructions corresponding to global transaction IDs in the latest current active transaction list, and encapsulate remaining database operation instructions into the second operation instruction block as the database operation instructions, which satisfy the filtering condition, in the global transaction submitted state.

4. The distributed database cluster system as claimed in claim 1, wherein the first data synchronization module (14) is further configured to:
receive synchronization position request information sent from a distributed database cluster system at a peer end, wherein the synchronization position request information carries a synchronization position between the distributed database cluster system and the distributed database cluster system at the peer end; and
encapsulate, according to the synchronization position carried in the synchronization position request information, the database operation instructions recorded by each first master database.

5. The distributed database cluster system as claimed in any one of claims 1 to 4, wherein the first data synchronization module (14) is further configured to:
receive an operation instruction block sent by a distributed database cluster system at a peer end, wherein the operation instruction block comprises a first operation instruction block or a second operation instruction block; and
execute database operation instructions in the received operation instruction block,
wherein preferably, the first data synchronization module (14) is configured to execute the database operation instructions in the received operation instruction block in the following manner:
persisting the database operation instructions in the received operation instruction block into a playback file; and
parsing the playback file, splitting the database operation instructions in the playback file by lines, and putting the database operation instructions into different working threads for processing,
wherein preferably, the first data synchronization module (14) is configured to parse the playback file, split the database operation instructions in the playback file by lines, and put the database operation instructions into different working threads for processing in the following manner:
splitting the database operation instructions in the received operation instruction block into different data lines according to table names and primary keys, wherein database operation instructions in a same data line compose a transaction according to a sequence; and
putting database operation instructions of different transactions into different working threads for processing.

6. The distributed database cluster system as claimed in claim 5, wherein the first data synchronization module (14) is further configured to:
persist a position where the database operation instructions are executed successfully into a file after the database operation instructions in the received operation instruction block are executed successfully.

7. The distributed database cluster system as claimed in claim 5, wherein in a case where the distributed database cluster system is a backup distributed database cluster system for the distributed database cluster system at the peer end,
the first data synchronization module (14) is configured to invoke the first consistency filtering module (22) when the distributed database cluster system needs to become a master distributed database cluster system in place of the distributed database cluster system at the peer end;
the first consistency filtering module (22) is configured to:
acquire a synchronization table corresponding to each first master database, determine a timestamp of a latest synchronization for each first master database according to the synchronization table, and determine an earliest timestamp from the timestamp of the latest synchronization for each first master database as a switching reference time point;
for each first master database for which the timestamp of the latest synchronization is later than the switching reference time point, roll data of the first master database back to a recorded state at the switching reference time point, and restore data of the first master database to a globally consistent state,
wherein preferably, the first consistency filtering module (22) is configured to roll the data of the first master database back to the recorded state at the switching reference time point, and restore the data of the first master database to the globally consistent state in the following manner:
generating a reverse database operation instruction for each database operation instruction after the switching reference time point, and executing the reverse database operation instruction; and
generating a reverse database operation instruction for each database operation instruction which is in a global transaction unsubmitted state at the switching reference time point, and executing the reverse database operation instruction.

8. A distributed database cluster system, comprising: a second data synchronization module (42) and a plurality of second database groups (44), wherein each second database group (44) of the plurality of second database groups (44) comprises a second master database,
the second data synchronization module (42) is configured to receive an operation instruction block sent by a distributed database cluster system at a peer end, wherein the operation instruction block comprises a first operation instruction block, database operation instructions, which are recorded by each first master database of the distributed database cluster system at the peer end between two adjacent clock synchronization instructions, are encapsulated in the first operation instruction block, wherein the filtering condition comprises that the database operation instructions are in a global transaction submitted state; and
execute database operation instructions in the received operation instruction block, wherein the distributed database cluster system comprises a distributed database cluster system as claimed in any one of claims 1 to 7.

9. The distributed database cluster system as claimed in claim 8, wherein the second data synchronization module (42) is configured to execute the database operation instructions in the received operation instruction block in the following manner:
persisting the database operation instructions in the received operation instruction block into a playback file; and
parsing the playback file, splitting the database operation instructions in the playback file by lines, and putting the database operation instructions into different working threads for processing,
wherein preferably, the second data synchronization module (42) is configured to parse the playback file, split the database operation instructions in the playback file by lines, and put the database operation instructions into different working threads for processing in the following manner:
splitting the database operation instructions in the received operation instruction block into different data lines according to table names and primary keys, wherein database operation instructions in a same data line compose a transaction according to a sequence; and
putting database operation instructions of different transactions into different working threads for processing.

10. The distributed database cluster system as claimed in any one of claims 8 to 9, wherein the second data synchronization module (42) is further configured to:
persist a position where the database operation instructions are executed successfully into a file after the database operation instructions in the received operation instruction block are executed successfully.

11. The distributed database cluster system as claimed in any one of claims 8 to 9, further comprising a second consistency filtering module (52), wherein
the second data synchronization module (42) is configured to invoke the second consistency filtering module (52) when the distributed database cluster system needs to become a master distributed database cluster system in place of the distributed database cluster system at the peer end;
the second consistency filtering module (52) is configured to:
acquire a synchronization table corresponding to each second master database, determine a timestamp of a latest synchronization for each second master database according to the synchronization table, and determine an earliest timestamp from the timestamp of the latest synchronization for each second master database as a switching reference time point;
for each second master database for which the timestamp of the latest synchronization is later than the switching reference time point, roll data of the second master database back to a recorded state at the switching reference time point, and restore the data of the second master database to a globally consistent state,
wherein preferably, the second consistency filtering module (52) is configured to roll the data of the second master database back to the recorded state at the switching reference time point, and restore the data of the second master database to a globally consistent state in the following manner:
generating a reverse database operation instruction for each database operation instruction after the switching reference time point, and executing the reverse database operation instruction; and
generating a reverse database operation instruction for each database operation instruction which is in a global transaction unsubmitted state at the switching reference time point, and executing the reverse database operation instruction.

12. A data synchronization method, applied to a first distributed database cluster system claimed in any one of claims 1 to 7, wherein each first database group (16) of the plurality of first database groups (16) comprises a first master database, the distributed database cluster system further comprising a first consistency filtering module (22), the method comprising:
periodically sending, by the first synchronization clock module (12), a clock synchronization instruction to each first master database (S602);
writing, by the first master database, the received database operation instructions into a log file of the first master database, and writing the received clock synchronization instruction into the log file;
acquiring, by the first data synchronization module (14), respectively the log file of each first master database, encapsulating the database operation instructions located between two adjacent clock synchronization instructions in the log file into the first operation instruction block, and sending the first operation instruction block (S604) to the first consistency filtering module (22);
receiving, by the first consistency filtering module (22), the first operation instruction block sent by the first data synchronization module, performing global consistency filtering on the first operation instruction block, encapsulating database operation instructions, which satisfy a filtering condition, in the first operation instruction block into a second operation instruction block, and sending the second operation instruction block to a distributed database cluster system at a peer end, wherein the filtering condition comprises that the database operation instructions are in a global transaction submitted state; or, the filtering condition comprises that the database operation instructions are in the global transaction submitted state and that the database operation instructions comply with a data object filtering rule corresponding to the distributed database cluster system at the peer end and
buffering, by the first consistency filtering module (22), database operation instructions, which are in a global transaction unsubmitted state, in the first operation instruction block, and when a next first operation instruction block corresponding to a current first master database sent by the first data synchronization module is received, adding the buffered database operation instructions to the first operation instruction block and then perform global consistency filtering on the first operation instruction block, wherein the global transaction submitted state refers to the instructions that have been executed, the global transaction unsubmitted state refers to the instructions that have not been executed.

13. A data synchronization method, applied to a second distributed database cluster system claimed in any one of claims 8 to 11, wherein each second database group (44) of the plurality of second database groups (44) comprises a second master database, the method comprising:
receiving, by the second distributed database cluster system, an operation instruction block sent by a first distributed database cluster system, wherein the operation instruction block comprises a first operation instruction block or a second operation instruction block, database operation instructions, which are recorded by each first master database of the distributed database cluster system at the peer end between two adjacent clock synchronization instructions, are encapsulated in the first operation instruction block, and database operation instructions, which satisfy a filtering condition, in the database operation instructions recorded by each first master database of the distributed database cluster system at the peer end between two adjacent clock synchronization instructions are encapsulated in the second operation instruction block, wherein the filtering condition comprises that the database operation instructions are in a global transaction submitted state; and
executing, by the second distributed database cluster system, database operation instructions in the received operation instruction block.

## Patentansprüche

1. Ein verteiltes Datenbankclustersystem, das Folgendes umfasst: ein erstes Synchronisationstaktmodul (12), ein erstes Datensynchronisationsmodul (14) und eine Vielzahl von ersten Datenbankgruppen (16), wobei jede erste Datenbankgruppe (16) der Vielzahl von ersten Datenbankgruppen (16) eine erste Masterdatenbank umfasst,
das erste Taktsynchronisationsmodul (12) so konfiguriert ist, dass es periodisch eine Taktsynchronisationsanweisung an jede erste Master-Datenbank (S602) sendet; und
das erste Datensynchronisationsmodul (14) so konfiguriert ist, dass es Datenbankoperationsanweisungen, die von jeder ersten Master-Datenbank zwischen zwei benachbarten, von dem ersten Synchronisationstaktmodul (12) gesendeten Taktsynchronisationsanweisungen aufgezeichnet werden, jeweils in einen ersten Operationsanweisungsblock einkapselt und den ersten Operationsanweisungsblock (S604) sendet, wobei
das erste Taktsynchronisationsmodul (12) so konfiguriert ist, dass es die Taktsynchronisationsanweisung periodisch an jede erste Master-Datenbank sendet;
die erste Master-Datenbank so konfiguriert ist, dass sie empfangene Datenbankoperationsanweisungen in eine Protokolldatei der ersten Master-Datenbank schreibt, und die empfangene Taktsynchronisationsanweisung in die Protokolldatei schreibt; und
das erste Datensynchronisationsmodul (14) so konfiguriert ist, dass es jeweils die Protokolldatei jeder ersten Master-Datenbank erfasst, die Datenbankoperationsanweisungen, die sich zwischen zwei benachbarten Taktsynchronisationsanweisungen in der Protokolldatei befinden, in den ersten Operationsanweisungsblock einkapselt und den ersten Operationsanweisungsblock sendet, wobei das verteilte Datenbankclustersystem ferner umfasst: ein erstes Konsistenzfilterungsmodul (22), wobei das erste Datensynchronisationsmodul (14) so konfiguriert ist, dass es den ersten Operationsanweisungsblock an das erste Konsistenzfilterungsmodul (22) sendet; und das erste Konsistenzfilterungsmodul (22) so konfiguriert ist, dass es den von dem ersten Datensynchronisationsmodul (14) gesendeten ersten Operationsanweisungsblock empfängt, eine globale Konsistenzfilterung an dem ersten Operationsanweisungsblock durchführt, Datenbankoperationsanweisungen, die eine Filterungsbedingung erfüllen, in dem ersten Operationsanweisungsblock in einen zweiten Operationsanweisungsblock einkapselt und den zweiten Operationsanweisungsblock an ein verteiltes Datenbankclustersystem an einem Peer-Ende sendet, wobei die Filterungsbedingung umfasst, dass sich die Datenbankoperationsanweisungen in einem globalen Transaktionseinreichungszustand befinden, oder die Filterbedingung umfasst, dass sich die Datenbankoperationsanweisungen in dem globalen Transaktionsübermittlungszustand befinden und dass die Datenbankoperationsanweisungen einer Datenobjekt-Filterregel entsprechen, die dem verteilten Datenbankclustersystem am Peer-Ende entspricht;
wobei, wenn das verteilte Datenbankclustersystem weiterhin das erste Konsistenzfiltermodul (22) umfasst, das erste Konsistenzfiltermodul (22) weiterhin so konfiguriert ist, dass es:
Puffern von Datenbank-Operationsanweisungen, die sich in einem globalen Transaktions-Unsubmitted-Zustand befinden, in dem ersten Operationsanweisungsblock, und wenn ein nächster erster Operationsanweisungsblock, der einer aktuellen ersten Master-Datenbank entspricht, die von dem ersten Datensynchronisationsmodul (14) gesendet wird, empfangen wird, Hinzufügen der gepufferten Datenbank-Operationsanweisungen zu dem ersten Operationsanweisungsblock und dann Durchführen einer globalen Konsistenzfilterung an dem ersten Operationsanweisungsblock, wobei sich der globale Transaction-Submitted-Zustand auf die Anweisungen bezieht, die ausgeführt wurden, und der globale Transaction-Unsubmitted-Zustand sich auf die Anweisungen bezieht, die nicht ausgeführt wurden.

2. Verteiltes Datenbankclustersystem nach Anspruch 1, wobei das erste Datensynchronisationsmodul (14) so konfiguriert ist, dass es den ersten Operationsanweisungsblock an ein verteiltes Datenbankclustersystem an einem Peer-Ende sendet;

3. Verteiltes Datenbankclustersystem nach Anspruch 1, wobei, wenn das verteilte Datenbankclustersystem weiterhin das erste Konsistenzfiltermodul (22) umfasst, das verteilte Datenbankclustersystem weiterhin umfasst: ein globales Transaktionsmanagementmodul (32), wobei
das globale Transaktionsverwaltungsmodul (32) so konfiguriert ist, dass es einen globalen Transaktionsidentifikator (ID) verwaltet, der in der Lage ist, eine globale Transaktion eindeutig zu identifizieren, und einen Zustand und einen Lebenszyklus jeder globalen Transaktion aufzeichnet;
das erste Synchronisationstaktmodul (12) so konfiguriert ist, dass es periodisch eine aktuelle aktive Transaktionsliste jeder ersten Hauptdatenbank anfordert, die aktuelle aktive Transaktionsliste und einen Zeitstempel für die Erfassung der aktuellen aktiven Transaktionsliste in einer Synchronisationstabelle aufzeichnet, die der ersten Hauptdatenbank entspricht, und den Zeitstempel und die Informationen der aktuellen aktiven Transaktionsliste in die Taktsynchronisationsanweisung einfügt, die an die erste Hauptdatenbank gesendet wird; und
das erste Konsistenzfiltermodul (22) so konfiguriert ist, dass es nach einer letzten aktuellen aktiven Transaktionsliste sucht, die in der Synchronisationstabelle aufgezeichnet ist, die einer aktuellen ersten Master-Datenbank entspricht, Datenbankoperationsanweisungen entfernt, die globalen Transaktions-IDs in der letzten aktuellen aktiven Transaktionsliste entsprechen, und verbleibende Datenbankoperationsanweisungen in den zweiten Operationsanweisungsblock als die Datenbankoperationsanweisungen einkapselt, die die Filterbedingung erfüllen, und zwar in dem globalen Transaktionseinreichungszustand.

4. Verteiltes Datenbankclustersystem nach Anspruch 1, wobei das erste Datensynchronisationsmodul (14) ferner so konfiguriert ist, dass es:
Empfangen von Synchronisationspositions-Anforderungsinformationen, die von einem verteilten Datenbank-Clustersystem an einem Peer-Ende gesendet werden, wobei die Synchronisationspositions-Anforderungsinformationen eine Synchronisationsposition zwischen dem verteilten Datenbank-Clustersystem und dem verteilten Datenbank-Clustersystem an dem Peer-Ende tragen; und
die von jeder ersten Master-Datenbank aufgezeichneten Datenbankoperationsanweisungen entsprechend der in den Synchronisationspositionsanforderungsinformationen enthaltenen Synchronisationsposition einkapseln.

5. Verteiltes Datenbankclustersystem nach einem der Ansprüche 1 bis 4, wobei das erste Datensynchronisationsmodul (14) ferner so konfiguriert ist, dass es:
Empfangen eines Operationsanweisungsblocks, der von einem verteilten Datenbankclustersystem an einem Peer-Ende gesendet wird, wobei der Operationsanweisungsblock einen ersten Operationsanweisungsblock oder einen zweiten Operationsanweisungsblock umfasst; und
Datenbankbetriebsanweisungen im empfangenen Betriebsanweisungsblock ausfü hren,
wobei vorzugsweise das erste Datensynchronisationsmodul (14) so konfiguriert ist, dass es die Datenbankoperationsanweisungen in dem empfangenen Operationsanweisungsblock auf die folgende Weise ausführt:
Speichern der Datenbankoperationsanweisungen in dem empfangenen Operationsanweisungsblock in einer Wiedergabedatei; und
Analysieren der Wiedergabedatei, Aufteilen der Datenbankoperationsanweisungen in der Wiedergabedatei nach Zeilen und Verteilen der Datenbankoperationsanweisungen auf verschiedene Arbeits-Threads zur Verarbeitung,
wobei vorzugsweise das erste Datensynchronisationsmodul (14) so konfiguriert ist, dass es die Wiedergabedatei parst, die Datenbankoperationsanweisungen in der Wiedergabedatei zeilenweise aufteilt und die Datenbankoperationsanweisungen in verschiedene Arbeits-Threads zur Verarbeitung in der folgenden Weise einbringt:
Aufteilen der Datenbankoperationsanweisungen in dem empfangenen Operationsanweisungsblock in verschiedene Datenzeilen gemäß Tabellennamen und Primärschlüsseln, wobei Datenbankoperationsanweisungen in einer gleichen Datenzeile eine Transaktion gemäß einer Sequenz bilden; und
Anweisungen für Datenbankoperationen verschiedener Transaktionen in verschiedene Arbeits-Threads zur Verarbeitung zu stellen.

6. Verteiltes Datenbankclustersystem nach Anspruch 5, wobei das erste Datensynchronisationsmodul (14) ferner so konfiguriert ist, dass es:
eine Position, an der die Datenbankoperationsanweisungen erfolgreich ausgeführt werden, in einer Datei zu belassen, nachdem die Datenbankoperationsanweisungen in dem empfangenen Operationsanweisungsblock erfolgreich ausgeführt wurden.

7. Verteiltes Datenbankclustersystem nach Anspruch 5, wobei in einem Fall, in dem das verteilte Datenbankclustersystem ein verteiltes Backup-Datenbankclustersystem für das verteilte Datenbankclustersystem am Peer-Ende ist,
das erste Datensynchronisationsmodul (14) so konfiguriert ist, dass es das erste Konsistenzfiltermodul (22) aufruft, wenn das verteilte Datenbankclustersystem ein Master-verteiltes Datenbankclustersystem anstelle des verteilten Datenbankclustersystems am Peer-Ende werden muss;
das erste Konsistenzfilterungsmodul (22) so konfiguriert ist, dass es:
eine Synchronisationstabelle zu erfassen, die jeder ersten Master-Datenbank entspricht, einen Zeitstempel einer letzten Synchronisation für jede erste Master-Datenbank gemäß der Synchronisationstabelle zu bestimmen und einen frühesten Zeitstempel aus dem Zeitstempel der letzten Synchronisation für jede erste Master-Datenbank als Schaltreferenzzeitpunkt zu bestimmen;
für jede erste Hauptdatenbank, für die der Zeitstempel der letzten Synchronisierung nach dem Umschaltreferenzzeitpunkt liegt, Daten der ersten Hauptdatenbank auf einen aufgezeichneten Zustand zum Umschaltreferenzzeitpunkt zurückrollen und Daten der ersten Hauptdatenbank auf einen global konsistenten Zustand wiederherstellen,
wobei vorzugsweise das erste Konsistenzfiltermodul (22) so konfiguriert ist, dass es die Daten der ersten Hauptdatenbank auf den aufgezeichneten Zustand zum Umschaltreferenzzeitpunkt zurückrollt und die Daten der ersten Hauptdatenbank auf die folgende Weise in den global konsistenten Zustand zurücksetzt:
Erzeugen einer umgekehrten Datenbankoperationsanweisung für jede Datenbankoperationsanweisung nach dem Schaltreferenzzeitpunkt und Ausführen der umgekehrten Datenbankoperationsanweisung; und
Erzeugen einer umgekehrten Datenbankoperationsanweisung für jede Datenbankoperationsanweisung, die sich zu dem Umschaltreferenzzeitpunkt in einem globalen Transaktions-Nichtvorlagezustand befindet, und Ausführen der umgekehrten Datenbankoperationsanweisung.

8. Ein verteiltes Datenbankclustersystem, das Folgendes umfasst: ein zweites Datensynchronisationsmodul (42) und eine Vielzahl von zweiten Datenbankgruppen (44), wobei jede zweite Datenbankgruppe (44) der Vielzahl von zweiten Datenbankgruppen (44) eine zweite Master-Datenbank umfasst,
das zweite Datensynchronisationsmodul (42) so konfiguriert ist, dass es einen Operationsanweisungsblock empfängt, der von einem verteilten Datenbankclustersystem an einem Peer-Ende gesendet wird, wobei der Operationsanweisungsblock einen ersten Operationsanweisungsblock umfasst, Datenbankoperationsanweisungen, die von jeder ersten Master-Datenbank des verteilten Datenbankclustersystems am Peer-Ende zwischen zwei benachbarten Taktsynchronisationsanweisungen aufgezeichnet werden, in dem ersten Operationsanweisungsblock eingekapselt sind, wobei die Filterbedingung umfasst, dass die Datenbankoperationsanweisungen in einem globalen Transaktionseinreichungszustand sind; und
Ausführen von Datenbankoperationsanweisungen in dem empfangenen Operationsanweisungsblock, wobei das verteilte Datenbankclustersystem ein verteiltes Datenbankclustersystem nach einem der Ansprüche 1 bis 7 umfasst.

9. Verteiltes Datenbankclustersystem nach Anspruch 8, wobei das zweite Datensynchronisationsmodul (42) so konfiguriert ist, dass es die Datenbankoperationsanweisungen in dem empfangenen Operationsanweisungsblock auf folgende Weise ausführt:
Speichern der Datenbankoperationsanweisungen in dem empfangenen Operationsanweisungsblock in einer Wiedergabedatei; und
Analysieren der Wiedergabedatei, zeilenweises Aufteilen der Datenbankoperationsanweisungen in der Wiedergabedatei und Einbringen der Datenbankoperationsanweisungen in verschiedene Arbeits-Threads zur Verarbeitung ,
wobei vorzugsweise das zweite Datensynchronisationsmodul (42) so konfiguriert ist, dass es die Wiedergabedatei parst, die Datenbankoperationsanweisungen in der Wiedergabedatei zeilenweise aufteilt und die Datenbankoperationsanweisungen in verschiedene Arbeits-Threads zur Verarbeitung in der folgenden Weise einbringt:
Aufteilen der Datenbankoperationsanweisungen in dem empfangenen Operationsanweisungsblock in verschiedene Datenzeilen gemäß Tabellennamen und Primärschlüsseln, wobei Datenbankoperationsanweisungen in einer gleichen Datenzeile eine Transaktion gemäß einer Sequenz bilden; und
Anweisungen für Datenbankoperationen verschiedener Transaktionen in verschiedene Arbeits-Threads zur Verarbeitung zu stellen.

10. Verteiltes Datenbankclustersystem nach einem der Ansprüche 8 bis 9, wobei das zweite Datensynchronisationsmodul (42) ferner so konfiguriert ist, dass es:
eine Position, an der die Datenbankoperationsanweisungen erfolgreich ausgeführt werden, in einer Datei zu belassen, nachdem die Datenbankoperationsanweisungen in dem empfangenen Operationsanweisungsblock erfolgreich ausgeführt wurden.

11. Verteiltes Datenbankclustersystem nach einem der Ansprüche 8 bis 9, das ferner ein zweites Konsistenzfiltermodul (52) umfasst, wobei
das zweite Datensynchronisationsmodul (42) so konfiguriert ist, dass es das zweite Konsistenzfiltermodul (52) aufruft, wenn das verteilte Datenbankclustersystem ein Master-verteiltes Datenbankclustersystem anstelle des verteilten Datenbankclustersystems am Peer-Ende werden muss;
das zweite Konsistenzfilterungsmodul (52) ist so konfiguriert, dass es:
eine jeder zweiten Master-Datenbank entsprechende Synchronisationstabelle zu erfassen, einen Zeitstempel einer letzten Synchronisation für jede zweite Master-Datenbank gemäß der Synchronisationstabelle zu bestimmen und einen frühesten Zeitstempel aus dem Zeitstempel der letzten Synchronisation für jede zweite Master-Datenbank als Schaltreferenzzeitpunkt zu bestimmen;
für jede zweite Hauptdatenbank, für die der Zeitstempel der letzten Synchronisierung nach dem Umschaltreferenzzeitpunkt liegt, Daten der zweiten Hauptdatenbank auf einen aufgezeichneten Zustand zum Umschaltreferenzzeitpunkt zurückrollen und die Daten der zweiten Hauptdatenbank auf einen global konsistenten Zustand zurücksetzen,
wobei vorzugsweise das zweite Konsistenzfiltermodul (52) so konfiguriert ist, dass es die Daten der zweiten Master-Datenbank auf den aufgezeichneten Zustand zum Umschalt-Referenzzeitpunkt zurückrollt und die Daten der zweiten Master-Datenbank auf die folgende Weise in einen global konsistenten Zustand zurücksetzt:
Erzeugen einer umgekehrten Datenbankoperationsanweisung für jede Datenbankoperationsanweisung nach dem Schaltreferenzzeitpunkt und Ausführen der umgekehrten Datenbankoperationsanweisung; und
Erzeugen einer umgekehrten Datenbankoperationsanweisung für jede Datenbankoperationsanweisung, die sich zu dem Umschaltreferenzzeitpunkt in einem globalen Transaktions-Nichtvorlagezustand befindet, und Ausführen der umgekehrten Datenbankoperationsanweisung.

12. Datensynchronisationsverfahren, angewandt auf ein erstes verteiltes Datenbank-Clustersystem nach einem der Ansprüche 1 bis 7, wobei jede erste Datenbankgruppe (16) der mehreren ersten Datenbankgruppen (16) eine erste Master-Datenbank umfasst, wobei das verteilte Datenbank-Clustersystem ferner ein erstes Konsistenz-Filtermodul (22) umfasst, wobei das Verfahren umfasst:
periodisches Senden einer Taktsynchronisationsanweisung durch das erste Synchronisationsuhrmodul (12) an jede erste Master-Datenbank (S602);
Schreiben der empfangenen Datenbankoperationsanweisungen durch die erste Master-Datenbank in eine Protokolldatei der ersten Master-Datenbank, und Schreiben der empfangenen Uhrensynchronisationsanweisung in die Protokolldatei;
Erfassen der Protokolldatei jeder ersten Master-Datenbank durch das erste Datensynchronisationsmodul (14), Einkapseln der Datenbankoperationsanweisungen, die sich zwischen zwei benachbarten Taktsynchronisationsanweisungen in der Protokolldatei befinden, in den ersten Operationsanweisungsblock und Senden des ersten Operationsanweisungsblocks (S604) an das erste Konsistenzfilterungsmodul (22);
Empfangen des von dem ersten Datensynchronisationsmodul gesendeten ersten Operationsanweisungsblocks durch das erste Konsistenzfilterungsmodul (22), Durchführen einer globalen Konsistenzfilterung an dem ersten Operationsanweisungsblock, Einkapseln von Datenbankoperationsanweisungen, die eine Filterbedingung erfüllen, in dem ersten Operationsanweisungsblock in einen zweiten Operationsanweisungsblock, und Senden des zweiten Operationsanweisungsblocks an ein verteiltes Datenbankclustersystem an einem Peer-Ende, wobei die Filterbedingung umfasst, dass die Datenbankoperationsanweisungen in einem globalen Transaktionsübermittlungszustand sind; oder die Filterbedingung umfasst, dass die Datenbankoperationsanweisungen in dem globalen Transaktionsübermittlungszustand sind und dass die Datenbankoperationsanweisungen einer Datenobjekt-Filterregel entsprechen, die dem verteilten Datenbankclustersystem am Peer-Ende entspricht, und
Puffern von Datenbankoperationsanweisungen, die sich in einem globalen Transaktions-Nichtvorlage-Zustand befinden, in dem ersten Operationsanweisungsblock durch das erste Konsistenzfilterungsmodul (22), und, wenn ein nächster erster Operationsanweisungsblock, der einer aktuellen ersten Master-Datenbank entspricht, die von dem ersten Datensynchronisationsmodul gesendet wird, empfangen wird, Hinzufügen der gepufferten Datenbankoperationsanweisungen zu dem ersten Operationsanweisungsblock und anschließendes Durchführen einer globalen Konsistenzfilterung an dem ersten Operationsanweisungsblock, wobei der globale Transaktionsvorlage-Zustand sich auf die Anweisungen bezieht, die ausgeführt wurden, und der globale Transaktions-Nichtvorlage-Zustand sich auf die Anweisungen bezieht, die nicht ausgeführt wurden.

13. Datensynchronisationsverfahren, angewandt auf ein zweites verteiltes Datenbank-Clustersystem nach einem der Ansprüche 8 bis 11, wobei jede zweite Datenbankgruppe (44) der Vielzahl von zweiten Datenbankgruppen (44) eine zweite Master-Datenbank umfasst, wobei das Verfahren umfasst:
Empfangen eines von einem ersten verteilten Datenbankclustersystem gesendeten Operationsanweisungsblocks durch das zweite verteilte Datenbankclustersystem, wobei der Operationsanweisungsblock einen ersten Operationsanweisungsblock oder einen zweiten Operationsanweisungsblock umfasst, wobei Datenbankoperationsanweisungen, die von jeder ersten Master-Datenbank des verteilten Datenbankclustersystems am Peer-Ende zwischen zwei benachbarten Taktsynchronisationsanweisungen aufgezeichnet werden, in dem ersten Operationsanweisungsblock eingekapselt sind, und Datenbankoperationsanweisungen, die eine Filterbedingung erfüllen, in den Datenbankoperationsanweisungen, die von jeder ersten Master-Datenbank des verteilten Datenbankclustersystems am Peer-Ende zwischen zwei benachbarten Taktsynchronisationsanweisungen aufgezeichnet wurden, in dem zweiten Operationsanweisungsblock eingekapselt sind, wobei die Filterbedingung umfasst, dass die Datenbankoperationsanweisungen in einem globalen Transaktionseinreichungszustand sind; und
Ausführen von Datenbankoperationsanweisungen im empfangenen Operationsanweisungsblock durch das zweite verteilte Datenbankclustersystem.

## Revendications

1. Système de cluster de bases de données distribuées, comprenant : un premier module d'horloge de synchronisation (12), un premier module de synchronisation de données (14) et une pluralité de premiers groupes de bases de données (16), où chaque premier groupe de bases de données (16) de la pluralité de premiers groupes de bases de données (16) comprend une première base de données maîtresse,
le premier module d'horloge de synchronisation (12) est configuré pour envoyer périodiquement une instruction de synchronisation d'horloge à chaque première base de données principale (S602) ; et
le premier module de synchronisation des données (14) est configuré pour encapsuler respectivement les instructions d'opération de base de données, qui sont enregistrées par chaque première base de données maître entre deux instructions de synchronisation d'horloge adjacentes envoyées par le premier module d'horloge de synchronisation (12), dans un premier bloc d'instructions d'opération, et envoyer le premier bloc d'instructions d'opération (S604), dans lequel
le premier module d'horloge de synchronisation (12) est configuré pour envoyer périodiquement l'instruction de synchronisation d'horloge à chaque première base de données principale ;
la première base de données principale est configurée pour écrire les instructions d'opération de base de données reçues dans un fichier journal de la première base de données principale, et écrire l'instruction de synchronisation d'horloge reçue dans le fichier journal ; et
le premier module de synchronisation des données (14) est configuré pour acquérir respectivement le fichier journal de chaque première base de données maître, encapsuler les instructions d'opération de base de données situées entre deux instructions de synchronisation d'horloge adjacentes dans le fichier journal dans le premier bloc d'instructions d'opération, et envoyer le premier bloc d'instructions d'opération, dans lequel le système de grappe de bases de données distribuées comprend en outre : un premier module de filtrage de cohérence (22), dans lequel le premier module de synchronisation de données (14) est configuré pour envoyer le premier bloc d'instructions d'opération au premier module de filtrage de cohérence (22) ; et le premier module de filtrage de cohérence (22) est configuré pour recevoir le premier bloc d'instructions d'opération envoyé par le premier module de synchronisation de données (14), effectuer un filtrage de cohérence global sur le premier bloc d'instructions d'opération, encapsuler les instructions d'opération de base de données, qui satisfont à une condition de filtrage, dans le premier bloc d'instructions d'opération dans un deuxième bloc d'instructions d'opération, et envoyer le deuxième bloc d'instructions d'opération à un système de cluster de base de données distribué à une extrémité homologue, dans lequel la condition de filtrage comprend que les instructions d'opération de base de données sont dans un état de soumission de transaction globale ; ou, la condition de filtrage comprend que les instructions d'opération de la base de données sont dans l'état de soumission de transaction globale et que les instructions d'opération de la base de données sont conformes à une règle de filtrage d'objet de données correspondant au système de cluster de base de données distribué à l'extrémité homologue;
lorsque le système de cluster de base de données distribué comprend en outre le premier module de filtrage de cohérence (22), le premier module de filtrage de cohérence (22) est en outre configuré pour:
mettre en mémoire tampon les instructions d'opération de base de données, qui sont dans un état de transaction globale non soumise, dans le premier bloc d'instructions d'opération, et lorsqu'un premier bloc d'instructions d'opération suivant correspondant à une première base de données principale actuelle envoyée par le premier module de synchronisation de données (14) est reçu, ajouter les instructions d'opération de base de données mises en mémoire tampon au premier bloc d'instructions d'opération, puis effectuer un filtrage de cohérence globale sur le premier bloc d'instructions d'opération, dans lequel l'état de transaction globale soumise fait référence aux instructions qui ont été exécutées, l'état de transaction globale non soumise fait référence aux instructions qui n'ont pas été exécutées.

2. Le système de cluster de base de données distribué selon la revendication 1, dans lequel le premier module de synchronisation de données (14) est configuré pour envoyer le premier bloc d'instructions d'opération à un système de cluster de base de données distribué à une extrémité homologue ;

3. Le système de cluster de base de données distribué selon la revendication 1, dans lequel, lorsque le système de cluster de base de données distribué comprend en outre le premier module de filtrage de cohérence (22), le système de cluster de base de données distribué comprend en outre : un module de gestion de transaction globale (32), dans lequel
le module de gestion des transactions globales (32) est configuré pour gérer un identifiant de transaction globale (ID) capable d'identifier de manière unique une transaction globale, et enregistrer un état et un cycle de vie de chaque transaction globale ;
le premier module d'horloge de synchronisation (12) est configuré pour demander périodiquement une liste de transactions actives en cours de chaque première base de données principale, enregistrer la liste de transactions actives en cours et un horodatage pour l'acquisition de la liste de transactions actives en cours dans une table de synchronisation correspondant à la première base de données principale, et mettre l'horodatage et les informations de la liste de transactions actives en cours dans l'instruction de synchronisation de l'horloge envoyée à la première base de données principale ; et
le premier module de filtrage de la cohérence (22) est configuré pour rechercher la dernière liste de transactions actives en cours enregistrée dans la table de synchronisation correspondant à une première base de données principale en cours, supprimer les instructions d'opération de base de données correspondant aux ID de transactions globales dans la dernière liste de transactions actives en cours, et encapsuler les instructions d'opération de base de données restantes dans le deuxième bloc d'instructions d'opération en tant qu'instructions d'opération de base de données, qui satisfont à la condition de filtrage, dans l'état de soumission de la transaction globale.

4. Le système de cluster de base de données distribué selon la revendication 1, dans lequel le premier module de synchronisation de données (14) est en outre configuré pour :
recevoir des informations de demande de position de synchronisation envoyées par un système de cluster de bases de données distribuées à une extrémité homologue, dans lequel les informations de demande de position de synchronisation portent une position de synchronisation entre le système de cluster de bases de données distribuées et le système de cluster de bases de données distribuées à l'extrémité homologue ; et
encapsuler, en fonction de la position de synchronisation indiquée dans les informations de demande de position de synchronisation, les instructions d'opération de base de données enregistrées par chaque première base de données principale.

5. Le système de cluster de base de données distribué selon l'une des revendications 1 à 4, dans lequel le premier module de synchronisation de données (14) est en outre configuré pour:
recevoir un bloc d'instructions d'opération envoyé par un système de grappe de bases de données réparties à une extrémité homologue, le bloc d'instructions d'opération comprenant un premier bloc d'instructions d'opération ou un deuxième bloc d'instructions d'opération ; et
exécuter des instructions d'opération de base de données dans le bloc d'instructions d'opération reçu,
dans lequel, de préférence, le premier module de synchronisation des données (14) est configuré pour exécuter les instructions d'opération de base de données dans le bloc d'instructions d'opération reçu de la manière suivante:
en conservant les instructions d'opération de la base de données dans le bloc d'instructions d'opération reçu dans un fichier de lecture; et
en analysant le fichier de lecture, en divisant les instructions d'opération de la base de données dans le fichier de lecture par lignes et en plaçant les instructions d'opération de la base de données dans différents fils de travail pour le traitement,
dans lequel, de préférence, le premier module de synchronisation des données (14) est configuré pour analyser le fichier de lecture, diviser les instructions d'opération de la base de données dans le fichier de lecture par lignes et placer les instructions d'opération de la base de données dans différents fils de travail pour le traitement de la manière suivante :
diviser les instructions d'opération de base de données dans le bloc d'instructions d'opération reçu en différentes lignes de données en fonction des noms de table et des clés primaires, les instructions d'opération de base de données dans une même ligne de données composant une transaction selon une séquence ; et
placer les instructions d'opération de base de données de différentes transactions dans différents fils de travail pour les traiter.

6. Le système de cluster de base de données distribué selon la revendication 5, dans lequel le premier module de synchronisation de données (14) est en outre configuré pour :
persister une position où les instructions d'opération de base de données sont exécutées avec succès dans un fichier après que les instructions d'opération de base de données dans le bloc d'instructions d'opération reçu ont été exécutées avec succès.

7. Le système de cluster de base de données distribué selon la revendication 5, dans lequel, dans le cas où le système de cluster de base de données distribué est un système de cluster de base de données distribué de secours pour le système de cluster de base de données distribué à l'extrémité homologue,
le premier module de synchronisation des données (14) est configuré pour invoquer le premier module de filtrage de cohérence (22) lorsque le système de grappes de bases de données distribuées doit devenir un système de grappes de bases de données distribuées maître à la place du système de grappes de bases de données distribuées à l'extrémité homologue;
le premier module de filtrage de cohérence (22) est configuré pour:
acquérir une table de synchronisation correspondant à chaque première base de données maître, déterminer un horodatage d'une dernière synchronisation pour chaque première base de données maître en fonction de la table de synchronisation, et déterminer un horodatage le plus précoce à partir de l'horodatage de la dernière synchronisation pour chaque première base de données maître en tant que point temporel de référence de commutation ;
pour chaque première base de données principale pour laquelle l'horodatage de la dernière synchronisation est postérieur au moment de référence de la commutation, ramener les données de la première base de données principale à un état enregistré au moment de référence de la commutation, et restaurer les données de la première base de données principale à un état globalement cohérent,
dans lequel, de préférence, le premier module de filtrage de la cohérence (22) est configuré pour ramener les données de la première base de données principale à l'état enregistré au moment de référence de la commutation, et restaurer les données de la première base de données principale à l'état globalement cohérent de la manière suivante :
en générant une instruction d'opération de base de données inverse pour chaque instruction d'opération de base de données après le moment de référence de commutation, et en exécutant l'instruction d'opération de base de données inverse ; et
en générant une instruction d'opération inverse de base de données pour chaque instruction d'opération de base de données qui est dans un état de transaction globale non soumise au moment de référence de la commutation, et en exécutant l'instruction d'opération inverse de base de données.

8. Un système de cluster de base de données distribué, comprenant: un second module de synchronisation de données (42) et une pluralité de seconds groupes de bases de données (44), où chaque second groupe de bases de données (44) de la pluralité de seconds groupes de bases de données (44) comprend une seconde base de données principale,
le deuxième module de synchronisation des données (42) est configuré pour recevoir un bloc d'instructions d'opération envoyé par un système de cluster de base de données distribué à une extrémité homologue, dans lequel le bloc d'instructions d'opération comprend un premier bloc d'instructions d'opération, les instructions d'opération de base de données, qui sont enregistrées par chaque première base de données maître du système de cluster de base de données distribué à l'extrémité homologue entre deux instructions de synchronisation d'horloge adjacentes, sont encapsulées dans le premier bloc d'instructions d'opération, dans lequel la condition de filtrage comprend que les instructions d'opération de base de données sont dans un état de soumission de transaction globale ; et
exécuter les instructions d'opération de base de données dans le bloc d'instructions d'opération reçu, le système de grappes de bases de données réparties comprenant un système de grappes de bases de données réparties tel que décrit dans l'une des revendications 1 à 7.

9. Le système de cluster de base de données distribué selon la revendication 8, dans lequel le second module de synchronisation de données (42) est configuré pour exécuter les instructions d'opération de base de données dans le bloc d'instructions d'opération reçu de la manière suivante :
en conservant les instructions d'opération de la base de données dans le bloc d'instructions d'opération reçu dans un fichier de lecture; et
en analysant le fichier de lecture, en divisant les instructions d'opération de la base de données dans le fichier de lecture par lignes et en plaçant les instructions d'opération de la base de données dans différents fils de travail pour le traitement,
dans lequel, de préférence, le second module de synchronisation des données (42) est configuré pour analyser le fichier de lecture, diviser les instructions d'opération de la base de données dans le fichier de lecture par lignes et placer les instructions d'opération de la base de données dans différents fils de travail pour traitement de la manière suivante :
diviser les instructions d'opération de base de données dans le bloc d'instructions d'opération reçu en différentes lignes de données en fonction des noms de table et des clés primaires, les instructions d'opération de base de données dans une même ligne de données composant une transaction selon une séquence ; et
en plaçant les instructions d'opération de base de données de différentes transactions dans différents fils de travail en vue de leur traitement.

10. Le système de cluster de bases de données distribuées selon l'une des revendications 8 à 9, dans lequel le second module de synchronisation de données (42) est en outre configuré pour:
persister une position où les instructions d'opération de base de données sont exécutées avec succès dans un fichier après que les instructions d'opération de base de données dans le bloc d'instructions d'opération reçu sont exécutées avec succès.

11. Le système de cluster de bases de données distribuées selon l'une des revendications 8 à 9, comprenant en outre un second module de filtrage de cohérence (52), dans lequel
le deuxième module de synchronisation des données (42) est configuré pour invoquer le deuxième module de filtrage de cohérence (52) lorsque le système de grappes de bases de données réparties doit devenir un système de grappes de bases de données réparties maître à la place du système de grappes de bases de données réparties à l'extrémité homologue;
le deuxième module de filtrage de cohérence (52) est configuré pour:
acquérir une table de synchronisation correspondant à chaque deuxième base de données maître, déterminer un horodatage d'une dernière synchronisation pour chaque deuxième base de données maître en fonction de la table de synchronisation, et déterminer un horodatage le plus précoce à partir de l'horodatage de la dernière synchronisation pour chaque deuxième base de données maître en tant que point temporel de référence de commutation;
pour chaque deuxième base de données principale pour laquelle l'horodatage de la dernière synchronisation est postérieur au moment de référence de la commutation, ramener les données de la deuxième base de données principale à un état enregistré au moment de référence de la commutation, et restaurer les données de la deuxième base de données principale à un état globalement cohérent,
dans lequel, de préférence, le second module de filtrage de la cohérence (52) est configuré pour ramener les données de la seconde base de données principale à l'état enregistré au moment de référence de la commutation, et restaurer les données de la seconde base de données principale à un état globalement cohérent de la manière suivante :
en générant une instruction d'opération de base de données inverse pour chaque instruction d'opération de base de données après le moment de référence de commutation, et en exécutant l'instruction d'opération de base de données inverse ; et
en générant une instruction d'opération inverse de base de données pour chaque instruction d'opération de base de données qui est dans un état de transaction globale non soumise au moment de référence de la commutation, et en exécutant l'instruction d'opération inverse de base de données.

12. Méthode de synchronisation des données, appliquée à un premier système de cluster de bases de données distribuées selon l'une quelconque des revendications 1 à 7, dans laquelle chaque premier groupe de bases de données (16) de la pluralité de premiers groupes de bases de données (16) comprend une première base de données principale, le système de cluster de bases de données distribuées comprenant en outre un premier module de filtrage de la cohérence (22), la méthode comprenant :
l'envoi périodique, par le premier module d'horloge de synchronisation (12), d'une instruction de synchronisation d'horloge à chaque première base de données principale (S602);
écrire, par la première base de données principale, les instructions d'opération de base de données reçues dans un fichier journal de la première base de données principale, et écrire l'instruction de synchronisation d'horloge reçue dans le fichier journal ;
acquisition, par le premier module de synchronisation de données (14), respectivement le fichier journal de chaque première base de données principale, encapsulation des instructions d'opération de base de données situées entre deux instructions de synchronisation d'horloge adjacentes dans le fichier journal dans le premier bloc d'instructions d'opération, et envoi du premier bloc d'instructions d'opération (S604) au premier module de filtrage de la cohérence (22) ;
recevoir, par le premier module de filtrage de cohérence (22), le premier bloc d'instructions d'opération envoyé par le premier module de synchronisation de données, effectuer un filtrage de cohérence global sur le premier bloc d'instructions d'opération, encapsuler les instructions d'opération de base de données, qui satisfont à une condition de filtrage, dans le premier bloc d'instructions d'opération dans un deuxième bloc d'instructions d'opération, et envoyer le deuxième bloc d'instructions d'opération à un système de cluster de base de données distribué à une extrémité homologue, dans lequel la condition de filtrage comprend que les instructions d'opération de base de données sont dans un état de soumission de transaction globale ; ou, la condition de filtrage comprend que les instructions d'opération de la base de données sont dans l'état de soumission de transaction globale et que les instructions d'opération de la base de données sont conformes à une règle de filtrage d'objet de données correspondant au système de cluster de base de données distribué à l'extrémité homologue, et
mise en mémoire tampon, par le premier module de filtrage de cohérence (22), des instructions d'opération de base de données qui sont dans un état de transaction globale non soumise, dans le premier bloc d'instructions d'opération, et lorsqu'un premier bloc d'instructions d'opération suivant correspondant à une première base de données principale actuelle envoyée par le premier module de synchronisation de données est reçu, ajout des instructions d'opération de base de données mises en mémoire tampon au premier bloc d'instructions d'opération, puis filtrage de cohérence globale sur le premier bloc d'instructions d'opération, l'état de transaction globale soumise se référant aux instructions qui ont été exécutées, l'état de transaction globale non soumise se référant aux instructions qui n'ont pas été exécutées.

13. Méthode de synchronisation des données, appliquée à un deuxième système de grappe de bases de données distribuées selon l'une des revendications 8 à 11, dans laquelle chaque deuxième groupe de bases de données (44) de la pluralité de deuxièmes groupes de bases de données (44) comprend une deuxième base de données principale, la méthode comprenant :
recevoir, par le deuxième système de cluster de bases de données distribuées, un bloc d'instructions d'opération envoyé par un premier système de cluster de bases de données distribuées, dans lequel le bloc d'instructions d'opération comprend un premier bloc d'instructions d'opération ou un deuxième bloc d'instructions d'opération, des instructions d'opération de base de données, qui sont enregistrées par chaque première base de données principale du système de cluster de bases de données distribuées à l'extrémité homologue entre deux instructions de synchronisation d'horloge adjacentes, sont encapsulées dans le premier bloc d'instructions d'opération, et les instructions d'opération de base de données qui satisfont à une condition de filtrage, dans les instructions d'opération de base de données enregistrées par chaque première base de données maître du système de cluster de bases de données distribuées à l'extrémité homologue entre deux instructions de synchronisation d'horloge adjacentes, sont encapsulées dans le deuxième bloc d'instructions d'opération, dans lequel la condition de filtrage comprend que les instructions d'opération de base de données sont dans un état de soumission de transaction globale ; et
l'exécution, par le second système de cluster de bases de données distribuées, des instructions d'opération de base de données dans le bloc d'instructions d'opération reçu.
